# EUROPEAN PATENT SPECIFICATION

(11) **EP 1 244 964 B1**
(45) Date of publication and mention of the grant of the patent: **20.10.2004**
(21) Application number: 00983409.4
(22) Date of filing: 21.12.2000
(51) Int. Cl.: G06F 9/46, H04L 29/06

(54) **METHOD AND SYSTEM FOR FRAME AND PROTOCOL CLASSIFICATION**
VERFAHREN UND SYSTEM FÜR RAHMEN- UND PROTOKOLL-KLASSIFIKATION
PROCEDE ET SYSTEME DE CLASSIFICATION DE TRAMES ET DE PROTOCOLES

(30) Priority: 07.01.2000 US 479027; 07.01.2000 US 479028
(43) Date of publication of application: 02.10.2002
(73) Proprietor: International Business Machines Corporation, Armonk, NY 10504 (US)
(72) Inventor: BASS, Brian, Mitchell, Apex, NC 27502 (US); CALVIGNAC, Jean, Louis, Cary, NC 27511 (US); DAVIS, Gordon, Taylor, Chapel Hill, NC 27514 (US); GALLO, Anthony, Matteo, Apex, NC 27502 (US); HEDDES, Marco, Winchester, Hampshire SO21 2JN (GB); JENKINS, Steven, Kenneth, Raleigh, NC 27608 (US); LEAVENS, Ross, Boyd, Cary, NC 27511 (US); SIEGEL, Michael, Steven, Raleigh, NC 27615 (US); VERPLANKEN, Fabrice, Jean, F-06610 La Gaude (FR)
(74) Representative: Waldner, Philip
(86) International application number: PCT/GB2000/004950
(87) International publication number: WO 2001/050259

(56) References cited:
- US-A- 5 357 632
- US-A- 5 748 905
- US-A- 5 870 394

## Description

### Background of the Invention

### Field of the Invention

The present invention relates to communication network apparatus such as is used to link together information handling systems or computers of various types and capabilities and to components and methods for data processing in such an apparatus. More particularly, the present invention relates to an improved system and method for managing data flow in a processing device coupled to a data transmission network, including a method and system for handling a plurality of input information units (otherwise known as "packets" or "frames") which may be simultaneously processed by a plurality of independent processors and which input information units can have one of a variety of different protocols.

### Background Art

The present embodiment is related to the following documents, all of which are assigned to the assignee of the present invention.

Patent application EP-A-1 226 509 by Brian Bass et al., entitled "Network Processor Processing Complex and Methods", sometimes referred to herein as the Network Processing Unit Patent or NPU Patent.

U.S. Patent 5,724,348 entitled "Efficient Hardware/Software Interface for a Data Switch" issued March 3, 1998, which patent is sometimes referred to as the Interface Patent.

Patent application US-A-6 222 380 entitled "High Speed Parallel/Serial Link for Data Communications", sometimes referred to as the Link Patent.

Various patents and applications assigned to IBM for its multiprotocol switching services, sometimes referred to as "MSS", some of which include Cedric Alexander as an inventor, and which are sometimes referred to as the MSS Patents.

The description of the present embodiment which follows is based on a presupposition that the reader has a basic knowledge of network data communications and the routers and switches which are useful in such network communications. In particular, this description presupposes familiarity with the International Standards Organization ("ISO") model of network architecture which divides network operation into layers. A typical architecture based on the ISO model extends from a Layer 1 (which is sometimes referred to as "L1") being the physical pathway or media through which signals are passed upward through Layers 2 (or "L2"), 3 (or "L3"), and so forth to Layer 7 (or "L7") which is the layer of application programming resident in a computer system linked to the network. Throughout this document, references to such layers as L1, L2, L3 are intended to refer to the corresponding layer of the network architecture. The present description also presupposes a fundamental understanding of the bit strings, known as packets or frames, used in network communication.

Bandwidth considerations (or the amount of data which a system can handle in a unit of time) are becoming more and more important in today's view of network operations. Network traffic has increased dramatically in recent years, driven largely by the explosive growth of the internet (a public network of loosely linked computers sometimes referred to as the worldwide web) and, to a lesser extent, the growth in popularity of private data transmission networks or intranets. The internet and intranets involve the transmission of large amounts of information between remote locations to satisfy an ever-growing need for remote access to information and emerging applications. The internet has opened up to large numbers of users in geographically disperse areas an exploding amount of remote information and enabled a variety of new applications, such as e-commerce, which has resulted in the increased and ever-increasing load on networks. Other applications, such as e-mail, file transfer and database access further add load to the networks, some of which are already under strain due to high levels of network traffic.

Traffic over networks is also becoming more and more diverse. At one time, some networks were used primarily for a certain type of communications traffic, such as voice on a telephone network and digital data over a data transmission network. Of course, in addition to the voice signals, a telephone network would also carry a limited amount of "data" (such as the calling number and the called number, for routing and billing purposes), but the primary use for some networks had, at one point in time, been substantially homogenous packets.

Presently, however, voice and data traffic are increasingly converging onto the same networks. As the internet continues to expand and the technology improve in areas like reliability and security, it has presented an opportunity to transmit many different kinds of information, including mixtures of different types of information, such as voice and data, relatively simultaneously.

Data is currently transmitted over the Internet (through the Internet Protocol or IP) at no charge, and voice traffic typically follows the path of lowest cost. Technologies such as voice over IP (VoIP) and voice over asynchronous transfer mode or ATM (VoATM) or voice over frame relay (VoFR) are cost-effective alternatives for transmission of voice traffic in today's environment. As these services migrate, the industry will be addressing issues such as the changing cost structure and concerns over the trade off between cost of service and quality of service in the transmission of information between processors.

Aspects of quality of service include the capacity or bandwidth, the response time (how long does it take to process a frame) and the flexibility of the processing (does it respond to different protocols and frame configurations, such as different encapsulation or frame header methods). Those using a resource will consider the quality of service as well as the cost of service, with the tradeoffs depending on the situation presented.

Some prior art systems which route data packets require that the packets be of a single protocol or format, or one of a limited number of such protocols or formats which are permitted. Such a system has advantages of increased speed and responsiveness because of the relative simplicity of the design when packets of only one type of protocol (or a limited number of protocols) are found in the system, since the system can be tailored for the permitted protocol(s). When the entire data transmission system was under the control of a single entity, it was easy for the controlling entity to enforce a single standard transmission protocol on users (either users followed the permitted protocol(s) or didn't use the network, because the network was programmed to accommodate only the specified protocol(s) and could not handle variations in the protocols, even seemingly minor variations).

However, frames from even a communications "standard" like Ethernet can be formatted using one of several protocols and can be encapsulated into a message using different encapsulation techniques. These different protocols and encapsulation techniques provide a varying amount of data, typically at the beginning of a frame and before other key information such as the beginning of the L3 message. Thus, key information from an Ethernet frame can be located in different places within the frame, depending on the Ethernet L3 protocol or form of Ethernet and the encapsulation technique, if one is present. A system which provides processing of the L3 message needs to find it first, and that can be a challenge in a multi-protocol system. So, for example, Ethernet DIX Version 2 differs from Ethernet 802.3, IPX over Ethernet differs from IPX over Ethernet 802.3 which itself has three different formats (Novell Proprietary, LLC and SNAP). Further, each version of IPX may or may not support a virtual LAN (or VLAN) using the so-called IEEE 802.1q standard, which also has the effect of changing the format of the frame, and thus the location of the L3 message.

In those prior systems in which frames in a multitude of protocols were supported, it was sometimes necessary to provide a significant amount of overhead (such as computer programming sometimes including more than one hundred lines of code with comparisons and branching instructions) to identify the protocol and to translate a frame from one protocol to another, or to remove unnecessary information (such as encapsulation information) from a frame. Such multiple protocol processing was time consuming and, further, often took a variable amount of time to identify the protocol. When such systems required a variable amount of time to identify the protocol and provide the necessary processing, the system would have to be configured to allow the longest time necessary (to handle the worst case), slowing down the processing of all frames to the worst case or creating the possibility that some frames would not be processed in the time allowed for categorization.

Most processors start processing from a common beginning of an instruction set (the same place for all data) and set flags which the processor reads selectively when it needs to determine where to go and which instructions to execute. Thus, the execution of many processors performs a number of tests to determine what kind of data it has and where to begin the substantive processing, tests which involve a number of cycles and could involve a lot of processing.

Multi-processor systems for handling data are known in the prior art which utilize rigid first-in-first-out processing of data. While this works fine when the processing occurs in a routine fashion, such a system becomes bound up and stops functioning when the processing of one input is delayed. The delay of the processing of one input has the effect of stopping the processing of others.

Other prior art systems are known which keep track of input message units during processing. These systems have the limitation and disadvantage that a significant amount of processing power must be devoted to keep t:rack of where each information unit is in the system, and some do not accommodate additional input information units, such as from new data flows or from internally generated messages.

US patent publication 5748905 discloses a frame processor having the ability to recognize and categorize frames of varying formats and permitting the implementation of various bridging and routing protocols. A search engine state machine completes the frame recognition process. It accesses a search table to associate a Vector ID for being used as a pointer to particular microcode for subsequent processing of the frame in the respective frame processor engines. Although the frame processor assigns frames to respective processor engines, it would be advantageous to allow input frames from a single data flow to be assigned to one of a plurality of independent processors and then allow the output to be reassembled into the same order in which the input frames were received

US patent publication 5357632 is directed to the dynamic task allocation in a multi-processor system employing distributed control processors and distributed control processors and distributed arithmetic processors.

Thus, the prior art systems for handling data packets had undesirable disadvantages and limitations which had an effect either on the versatility of the system or the speed with which it could operate, or both. Other disadvantages and limitations of the prior art systems will be apparent to those skilled in the art in view of the following description of the present invention.

### Summary of the Invention

The present embodiment of the invention overcomes the disadvantages and limitations of the prior art systems by providing a simple, yet effective, way of managing the data flow over a network of frames or packets which were created using one of a plurality of different permitted message protocols and which may or may not employ a virtual local area network (or VLAN) system. By analyzing each packet or frame in a quick and efficient manner, the type of frame and key characteristics of the frame can be determined and saved for future reference and processing regarding that frame, for example, in a network processor of the type described in the NPU Patent referenced above.

It is an advantage of the present embodiment that it is quick and efficient in the handling of packets having different protocols and provides for faster and easier processing of the packets, allowing the entire system to operate at a high rate of frame processing.

The present embodiment allows a router or switch to process successive packets or frames in varying formats without knowing in advance in what format the particular frame or packet was created. This embodiment includes identifying the layer 2 (L2) encapsulation format of the message or packet and then applying stored rules to identify the L2 encapsulation, the L3 protocol and the presence of a virtual local area network (VLAN). As a result of such determination, the processor is ready to run at a starting instruction address; that is, the processor is preconditioned with the instruction's starting address which is based on the identification of the frame. The processor thus has a starting instruction address as well as a pointer to the beginning of the L3 header in the data portion of the frame as well as flags indicating the protocol, VLAN presence and the encapsulation format.

The present embodiment has the advantage that it sets up and stores key information about a packet during the initial processing of the packet, then that stored information about the packet or frame can be used later in the processing to advantage, allowing quicker and more efficient processing of the packet in its later stages, for example, by network processing unit complexes described in the NPU Patent.

The present embodiment has the advantage that it allows input packets or frames from a single data flow to be assigned to one of a plurality of independent processors for processing, then allows the output (processed) packets or frames to be reassembled into the same order in which the input packets or frames were received.

The present embodiment has the advantage that multiple data flows can be processed without influencing each other, and one data flow will not block the other data flows. That is, when the processing of one data flow is halted awaiting completion of the processing of one portion thereof, the processing of the other data flows can continue.

The present embodiment also allows a flushing of the system or immediate dispatching of completed frames without regard to order, if desired, overriding the normal operation of handling each data flow in the order in which it was received.

The present embodiment also has the advantage that it is efficient in its use of buffers and storage devices and that it operates quickly, so that the speed of the processing is not reduced by the overhead of managing the data flows.

The present embodiment contemplates that it can be implemented on the same semiconductor substrate as an array of network processors and their associated storage components, allowing for fast data transmission between the components.

The present embodiment can also be implemented in hardware, rather than software, and the required format tests can be completed in a uniform time regardless of the format and how many comparisons must be made before the format or encapsulation techniques is determined. In the design shown, within two cycles of the clock, the classification of a frame can be completed, with the necessary indicators set to indicate what kind of a frame is present (e.g., what encapsulation technique and what layer 3 protocol were used) and whether a virtual LAN (or VLAN) is supported as well as key information about the frame. During the same two cycles, a frame can be routed by a dispatcher to an idle network processing unit (as described in the referenced NPU Patent). As a result of the processing of the frame to determine the protocol and encapsulation method, a starting address for the processor can be determined and passed to the processor so that the processor can begin its work on the frame, pre-loaded with the starting address (a pointer to the relevant instruction storage) and other relevant information for its processing. This pre-loading of the processor with a starting address for processing is sometimes referred to as preconditioning of the processor and enables processor efficiency -- it need not go through a number of test instructions and jump instructions based on the results of the test, but instead starts at the initial address for the particular format of message presented.

The system of the present embodiment also has the advantage that the classification and preprocessing of a frame can occur in parallel with the distribution of that frame to a network processing complex. This parallel processing allows for more efficient handling of frames and allows the system to operate faster.

Through the use of the present embodiment, multiple processing units may be independent one of the other, yet process the same data flow without allowing portions to get into a different and undesirable order. The output of processed packets or frames for a given data flow will be in the same order as the system received input packets or frames from that data flow, unless overridden by a flush command.

Finally, the present embodiment allows for the insertion of new data flows and the creation of packets or frames by the system without affecting the processing which maintains the order of the data flows received from the network.

One enhancement to the present embodiment allows not only the preconditioning of the processor (storing the address of the first instruction) but also storing of additional addresses of instructions for later execution. In this way, the processor has the address of the first instruction and also the address for instructions at later branch (or fork) points, avoiding unnecessary testing (if condition, then go to instruction #1 otherwise go to instruction #2) in the execution of the code. This allows the code to execute more efficiently.

Other objects and advantages of the present embodiment will be apparent to those skilled in the relevant art in view of the following description of the preferred embodiment, taken together with the accompanying drawings and the appended claims.

### Brief Description of the Drawings

Having thus set forth some of the limitations and disadvantages of the prior art and some objects and advantages of the present invention, other objects and advantages will be apparent to those skilled in the relevant art in view of the following description of the drawings illustrating the present invention of an improved routing system and method in which:
Fig.1 is a block diagram for an interface device including embedded processor complex which is described in the NPU patent and is useful in practicing the present invention;
Fig. 2 is a block diagram of an embedded processor complex of type shown in Fig. 1, with a classifier hardware assist useful in the present invention;
Figs. 3A-3T are diagrams illustrating the various Ethernet protocol formats used in the hardware classifier of the present invention;
Fig. 4 is a flow chart of the classifier hardware assist of the present invention, showing the logic used by the classifier to process frame portions in the present invention;
Fig. 5 is a functional diagram illustrating the classifier of the present invention;
Fig. 6 is an alternate embodiment of the hardware classifier of the present invention with optional enhancements shown, allowing a series of addresses to be stored in a stack in addition to the address of the first instruction;
Fig. 7 is a schematic illustration of the queues associated with each frame;
Fig. 8 is a detailed view of the completion unit of the present invention, with two label stores for each of the N processors;
Fig. 9 is a schematic illustration of the format of a label store for keeping track of the data flow being handled by each of the N processors;
Fig. 10 is a flow chart illustrating the logic which is performed by the completion unit in receiving and processing an indication that a new frame has been dispatched to one of the processing units;
Fig. 11 is a flow chart illustrating the logic process performed by the completion unit when processing a report that the processing of a frame has been completed; and
Fig. 12 is another view of the completion unit of Fig. 8, containing data to illustrate the operation of the completion unit in its preferred embodiment.

### Detailed Description of the Preferred Embodiment

In the following description of the preferred embodiment, the best implementations of practicing the invention presently known to the inventors will be described with some particularity. However, this description is intended as a broad, general teaching of the concepts of the present invention in a specific embodiment but is not intended to be limiting the present invention to that as shown in this embodiment, especially since those skilled in the relevant art will recognize many variations and changes to the specific structure and operation shown and described with respect to these figures.

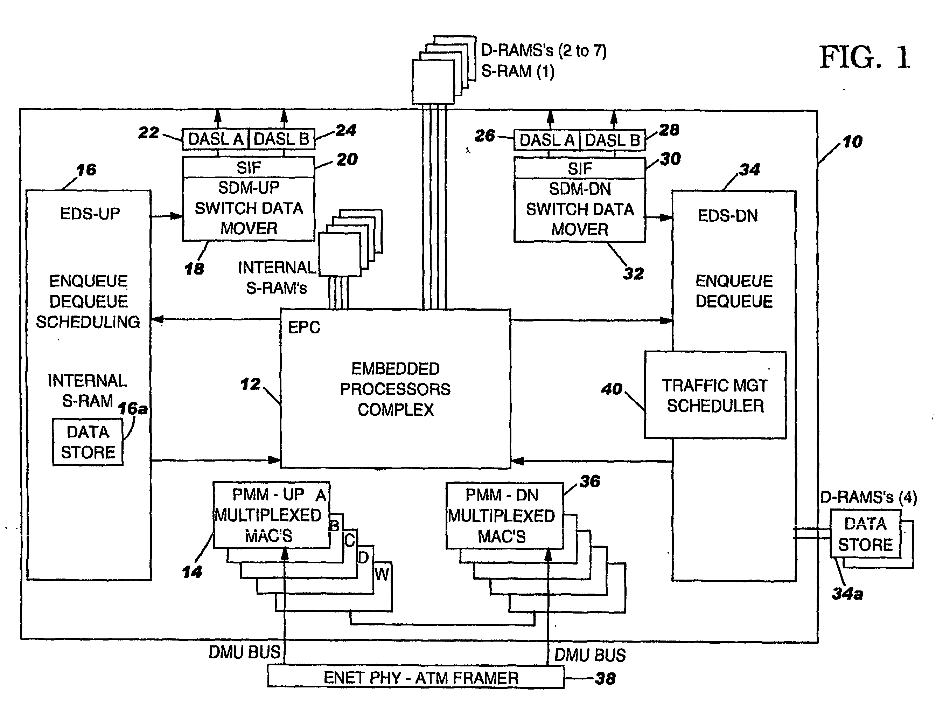

Fig. 1 is a functional block diagram of a processing system suitable for attachment to a data transmission network for receiving, processing and re-transmitting data to the network in the form of packets or information units (also sometimes referred to as frames, terms which, for the purpose of the present document, will be used interchangeably). As shown in Fig. 1, the system for data processing includes a plurality of subassemblies, which, as described in the NPU Patent, are advantageously integrated into a single substrate. The integration of the entire assembly on a single substrate allows for closely packing the various components of the system, reducing the time needed for communication between components and therefore increasing the speed at which the system can operate. The use of a single substrate for the multiple processors and supporting logic and memory can also reduce the incidence of failures due to interconnection and increase the resistance to noise or other stray signals which might corrupt the date transmission in the network.

The sub-assemblies mounted on substrate 10 are arranged into an upside configuration and a downside configuration, with the "upside" configuration (sometimes also referred to as an "ingress") referring to those components relating to data inbound to the chip from a data transmission network (up to or into the chip) and "downside" (sometimes referred to as an "egress") referring to those components whose function is to transmit data from the chip toward the data transmission network in an outbound fashion (away from the chip or down and into the network). Data flows follow the respective arrangements of the upside and downside configurations; thus, there is a upside data flow and a downside data flow in the system of Fig. 1. The upside or ingress configuration elements include an Enqueue-Dequeue-Scheduling UP (EDS-UP) logic 16, multiple multiplexed MAC's-UP (PMM-UP) 14, Switch Data Mover-UP (SDM-UP) 18, System Interface (SIF) 20, Data Align Serial Link A (DASL-A) 22 and Data Align Serial Link B (DASL-B) 24. Data links are more fully described in the Link Patent referenced above, and reference should be made to that document for a greater understanding of this portion of the system. It should be understood that the preferred embodiment of the present invention uses the data links as more fully described in that patent, other systems can be used to advantage with the present invention, particularly those which support relatively high data flows and system requirements, since the present invention is not limited to those specific auxiliary devices such as the data links which are employed in the preferred embodiment.

The components depicted on the downside (or egress) of the system include data links DASL-A 26 and DASL-B 28, system interface SIF 30, switch data mover SDM-DN 32, enqueue-dequeue-scheduler EDS-DN 34 and multiple multiplexed MAC's for the egress PMM-DN 36. The substrate 10 also includes a plurality of internal static random access memory components (S-RAM's),a traffic management scheduler (TRAFFIC MGT SCHEDULER) 40 and an embedded processor complex 12 described in greater depth in the NPU Patent referenced. above. An interface device 38 is coupled by the respective DMU busses to PMM 14, 36. The interface device 38 could be any suitable apparatus for connecting to the L1 circuitry, such as Ethernet physical (ENET PHY) devices or asynchronous transfer mode framing equipment (ATM FRAMER), both of which are examples of devices which are well known and generally available for this purpose in the trade. The type and size of the interface device are determined, at least in part, by the network media to which the present chip and its system are attached. A plurality of external dynamic random access memory devices (D-RAMS) and a S-RAM are available for use by the chip.

While here particularly disclosed for networks in which the general data flow outside the relevant switching and routing devices is passed through electric conductors such as wires and cables installed in buildings, the present invention contemplates that the network switches and components thereof could be used in a wireless environment as well. For example, the media access control (MAC) elements herein disclosed may be replaced with suitable radio frequency devices, such as those made from silicon germanium technology, which would result in the connection of the device disclosed directly to a wireless network. Where such technology is appropriately employed, the radio frequency elements can be integrated into the VLSI structures disclosed herein by a person of skill in the appropriate arts. Alternatively, radio frequency or other wireless response devices such as infrared (IR) response devices can be mounted on a blade with the other elements herein disclosed to achieve a switch apparatus which is useful with wireless network apparatus.

The arrows show the general flow of data within the interface system shown in Fig. 1. Frames of data or messages received from an Ethernet MAC 14 off the ENET PHY block 38 via the DMU bus are placed in internal data store buffers 16a by the EDS-UP device 16. The frames may be identified as either normal frames or guided frames, which then relates to method and location of the subsequent processing in the plurality of processors.

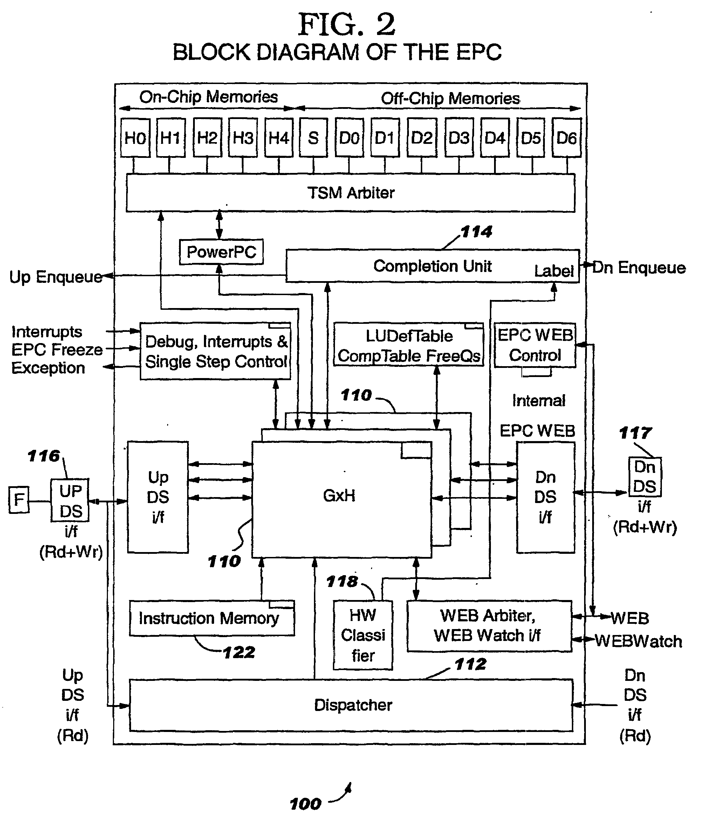

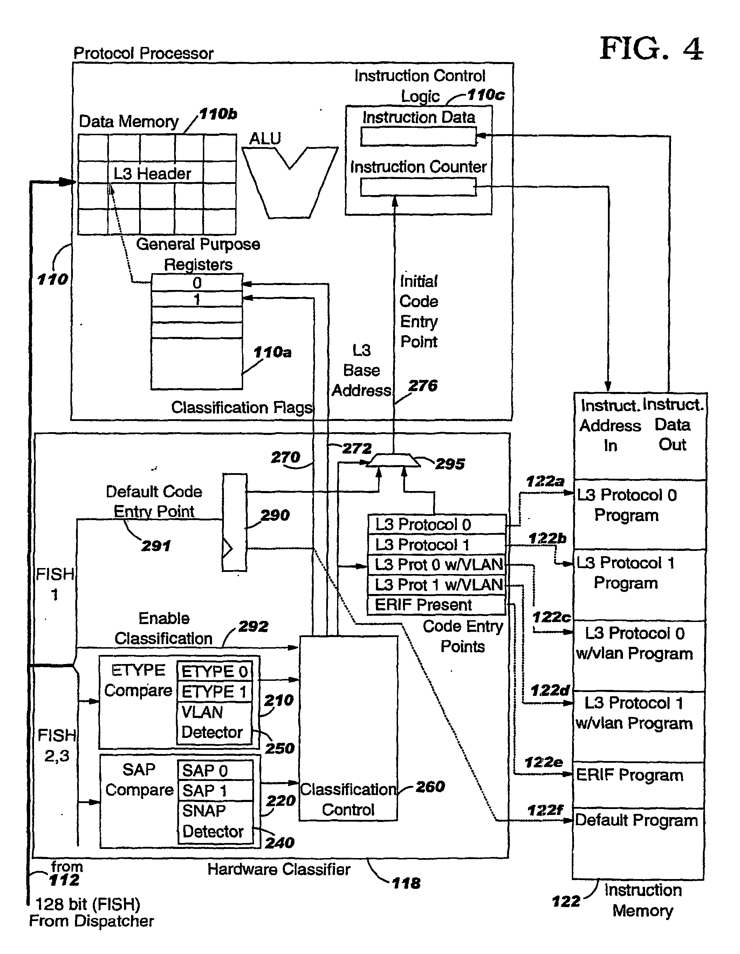

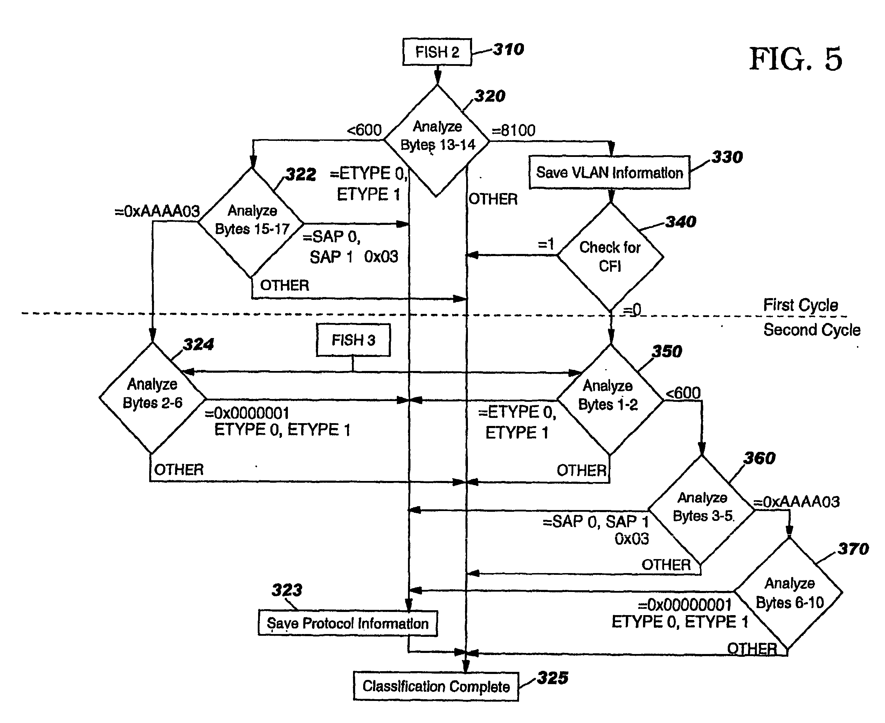

Fig. 2 is a block diagram of a processing system 100 which can employ the present invention to advantage. In this Fig. 2, a plurality of processing units 110 are located between a dispatcher unit 112 and a completion unit 114. Each incoming frame F (from a network, not shown, attached t:o the present data processing system) is received and stored into an UP data store 116 which is connected to the processing units 110 through an interface UP DS i/f 117 which has the capability to read and write data to the data store. The frames are sequentially removed by the dispatcher 112 and assigned to one of the plurality of processing units 110, based on a determination by the dispatcher 112 that the processing unit is available to process the frame. This indication could be that the one processing unit to which the frame F is assigned has sent a signal to the dispatcher 112 indicating that that particular processing unit was idle and available for work, although alternate methods of assigning work (such as a round-robin allocation or a least recently used algorithm) could also be employed to advantage in the present system. Greater detail on the structure and function of the processing units 110 in particular, and the processing system in general, can be found in the NPU Patent references above.
Interposed between the dispatcher 112 and the plurality of processing units 110 is a hardware classifier assist 118 as will be described in greater detailed later in this document, particularly in connection with Figs. 4 and 5. Also associated with the plurality of processing units 110 is an instruction storage 122 (shown in Fig. 4) where a plurality of different instruction sets are stored for retrieval and execution by the individual processing units 110. As will be described later, the starting instruction in the instruction storage 122 is addressed in accordance with an address which is based on the type of message -- its protocol and encapsulation method -- as determined by the hardware classifier assist 118.

A completion unit 114 is operatively coupled between the plurality of processors 110 and the down enqueue system (labeled DN Enqueue - element 34 in Fig. 1) as well as an UP enqueue system (element 16 in Fig. 1). The DN Enqueue system 34 is used to send processed frames out from the processing complex down to the network or other system to which the complex is attached and the UP enqueue system 16 is used to send processed frames to the switch fabric. The dispatcher 112 can be designed to assign and store identification information related to each frame and to the processing unit assigned to process such frame. Such identification information can then be used by the completion unit 114 to ensure that processed frames making up a single data flow are forwarded in the order in which they were received. This aspect of the present invention will be discussed in more detail later in this specification.

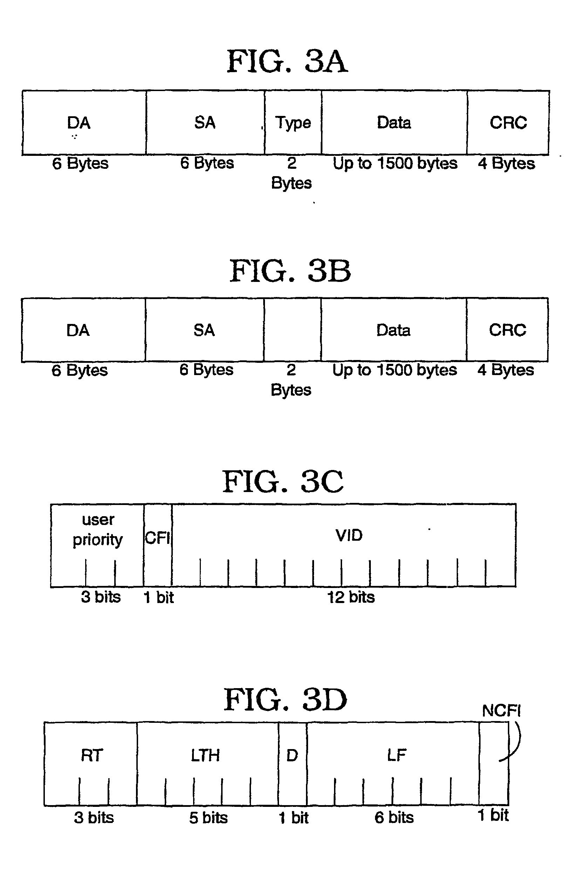

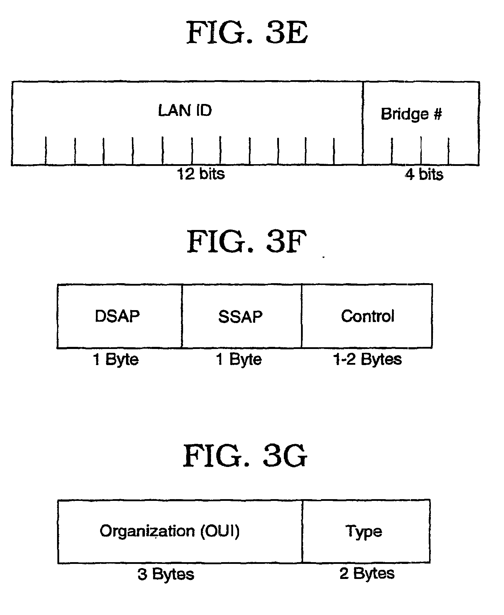

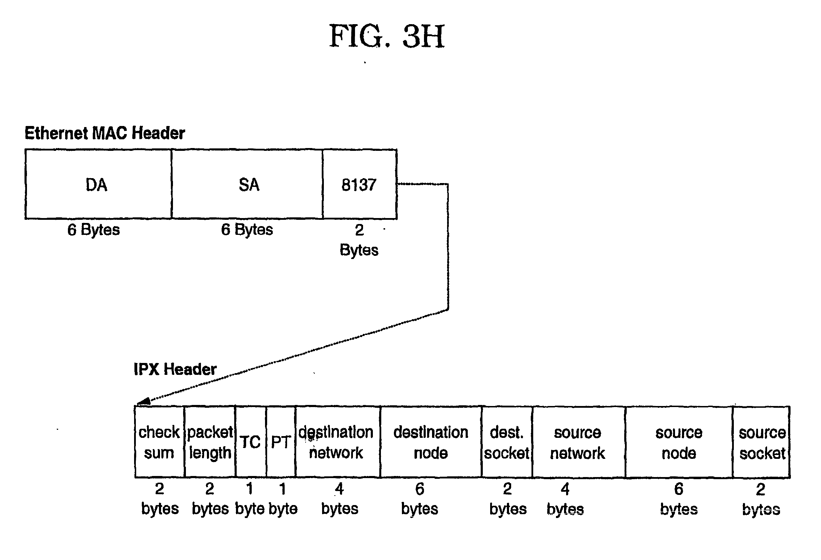

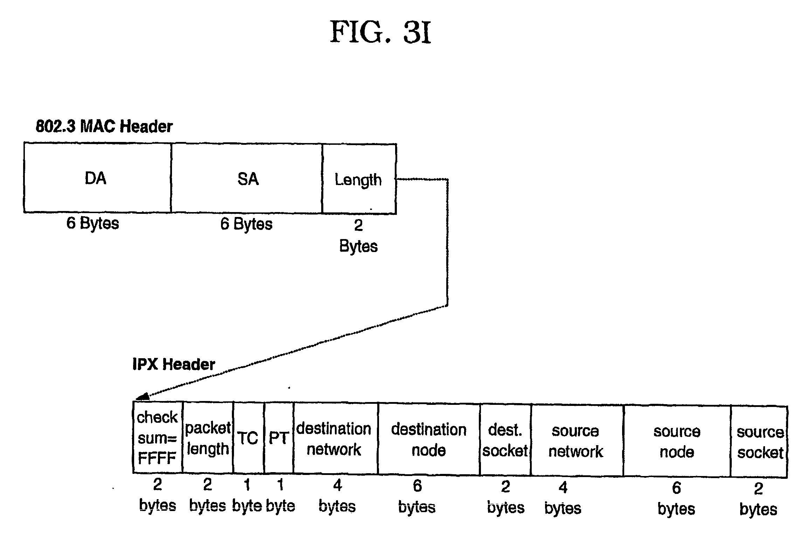

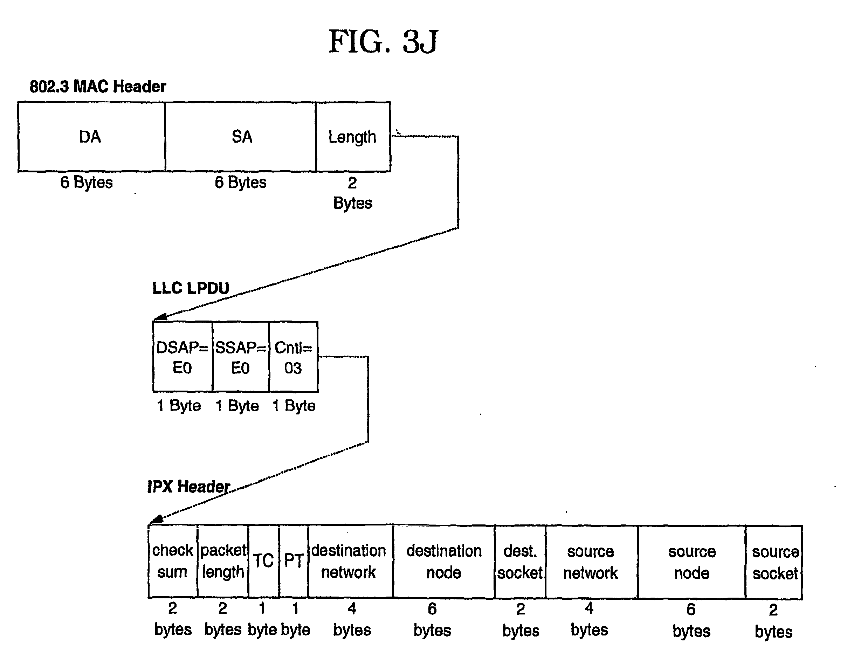

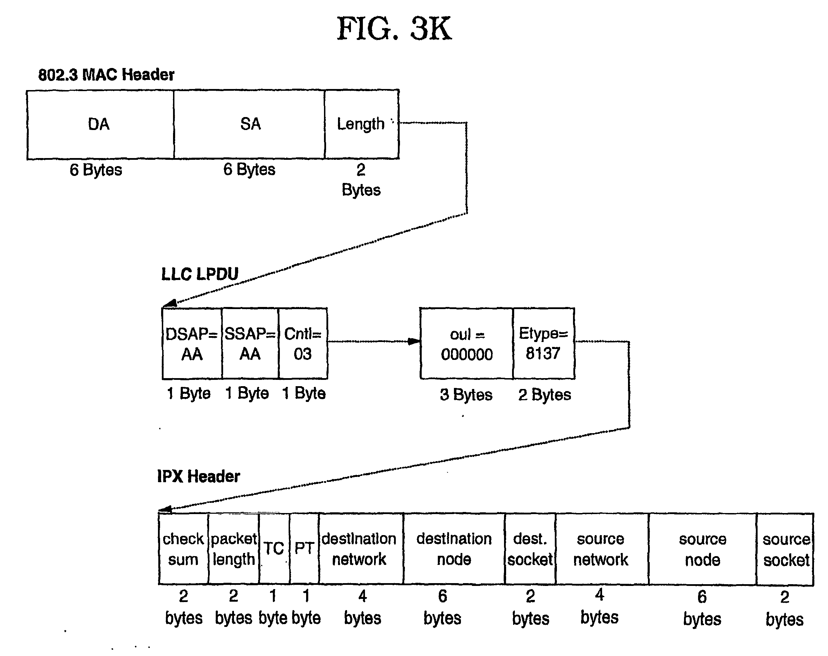

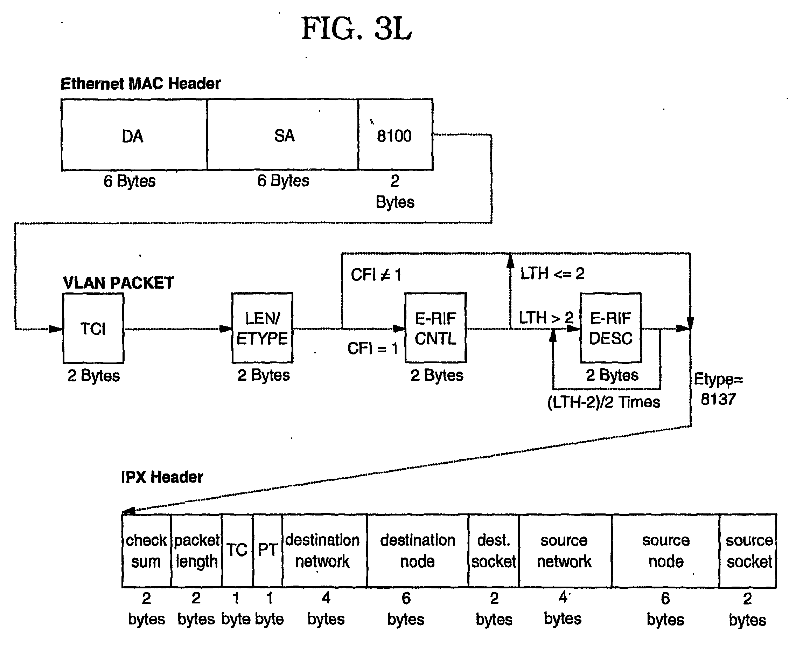

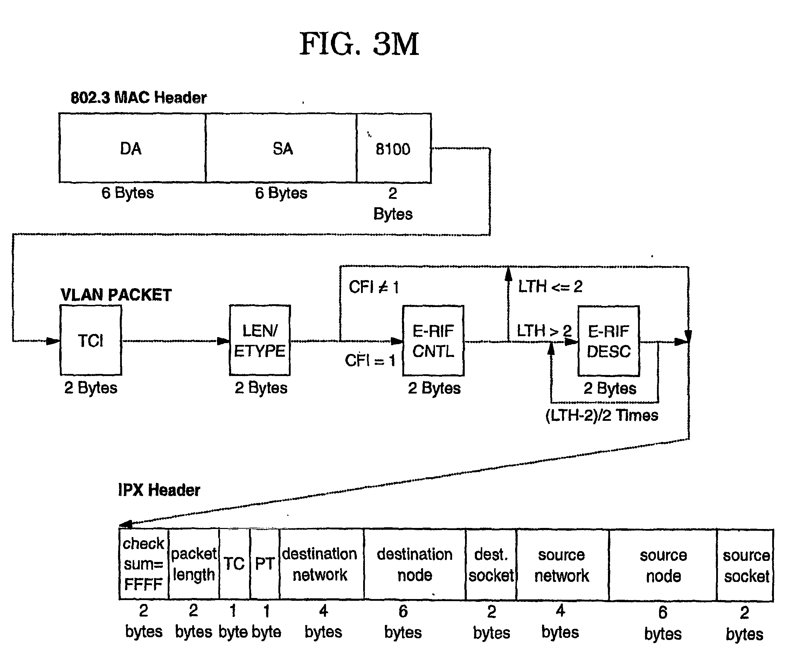

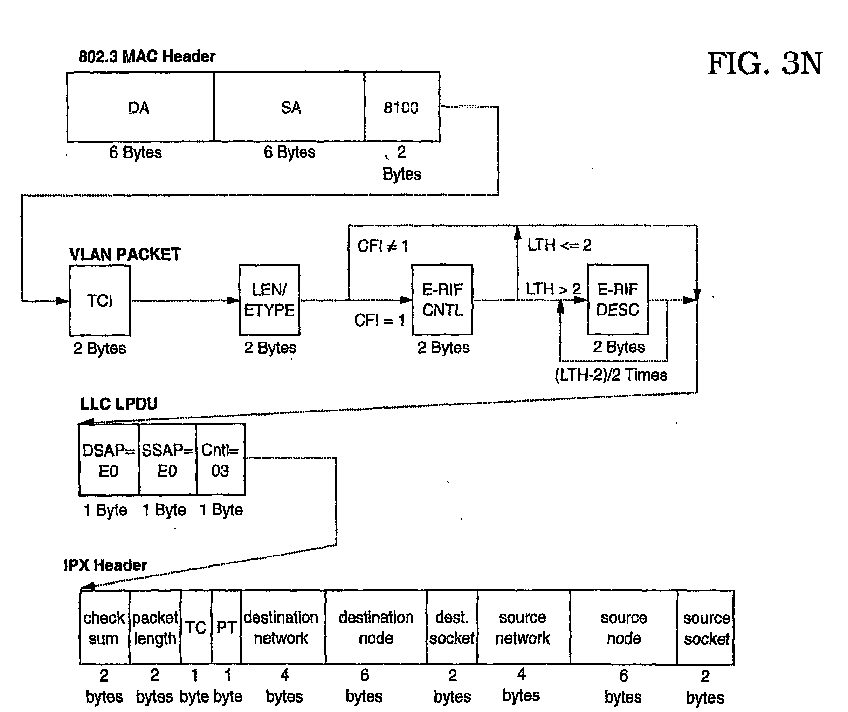

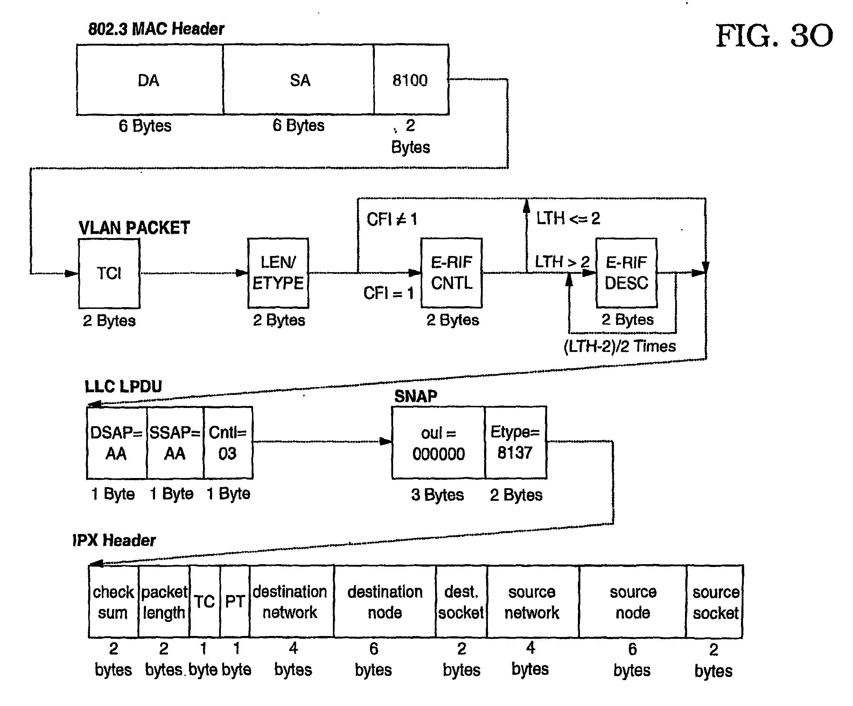

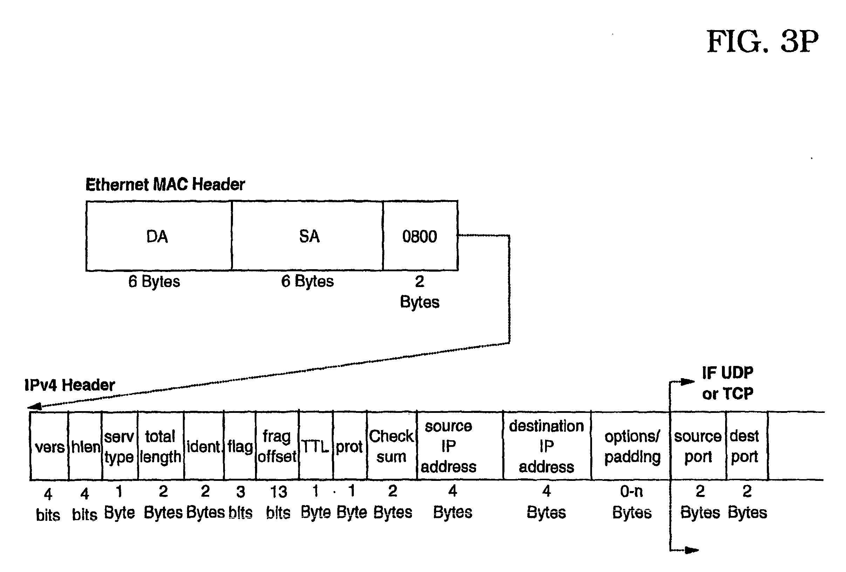

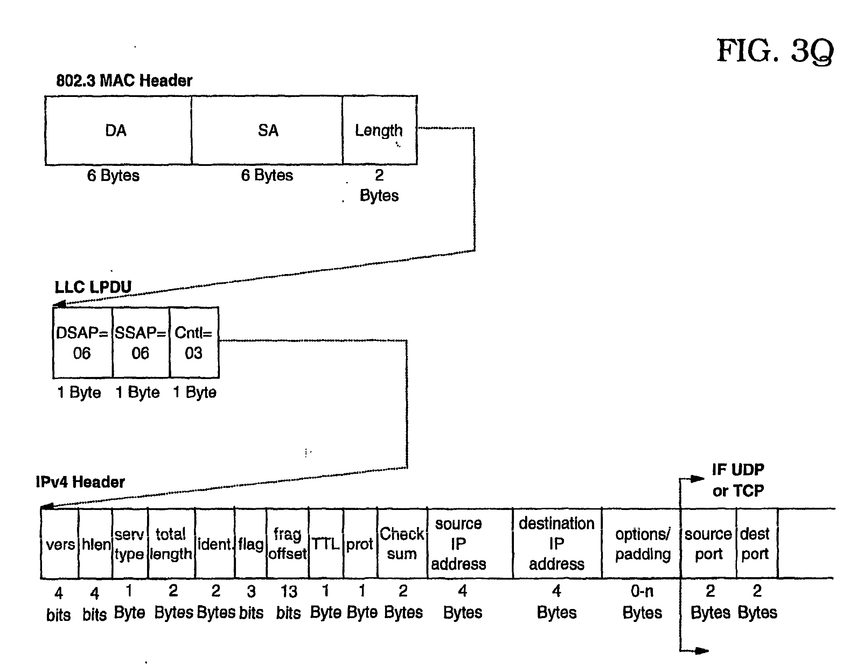

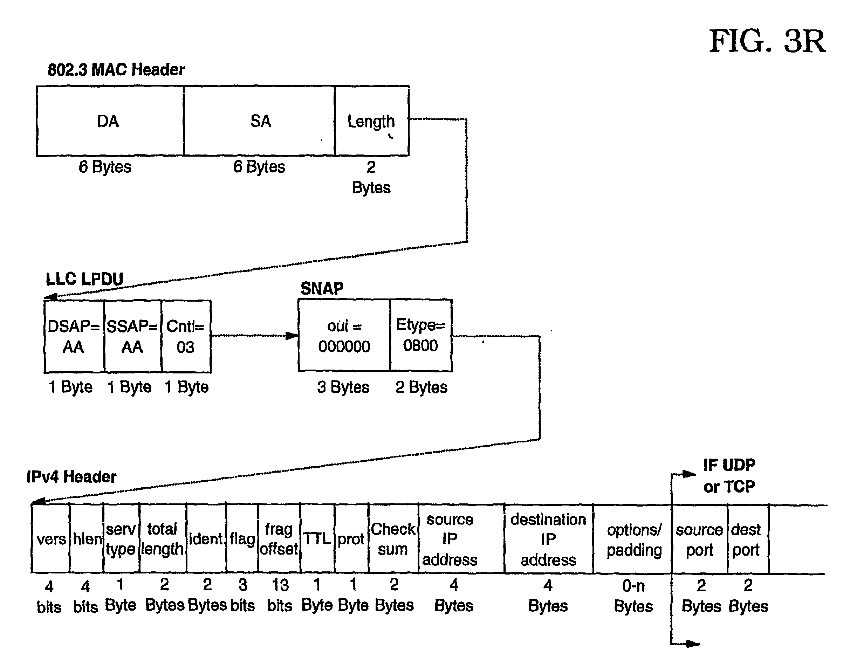

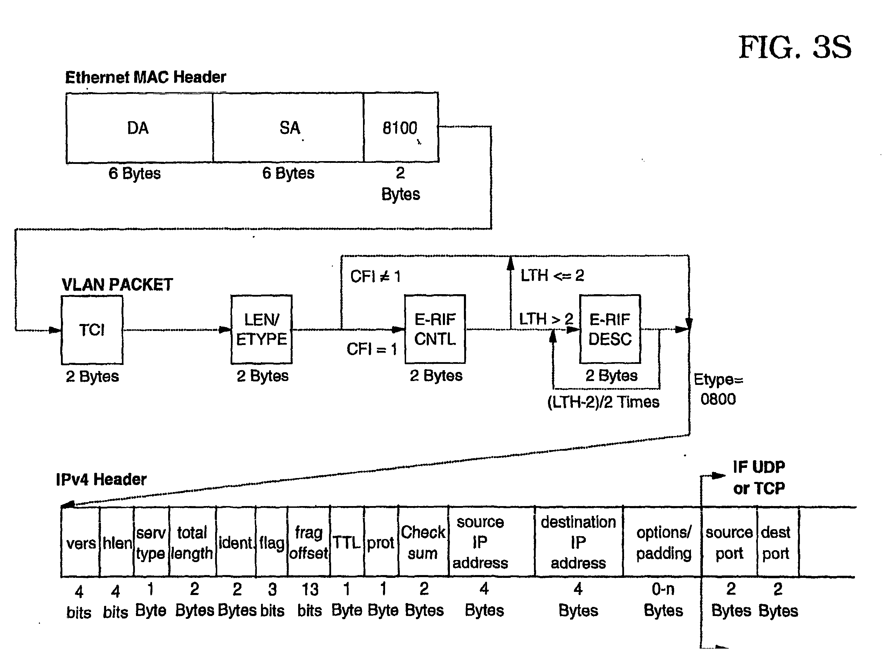

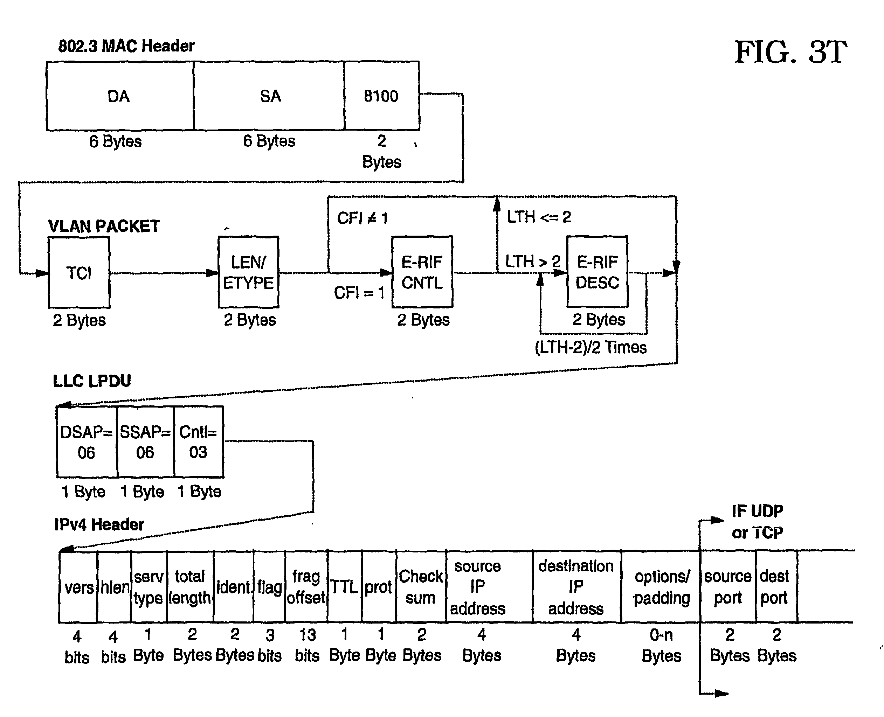

Fig. 3 (consisting of its various sub-illustrations, Figs. 3A-3T) depicts a plurality of message formats (components and variations on the Ethernet message format) which the present processing system is programmed to accept and process, although the repertoire of message or frame formats is something that can be varied by those skilled in the art to fit the environment of the system under consideration. The present system can also be redesigned to accept other message formats, including those message formats and variations which may be designated in the future. As such, the message formats of Fog. 3 are for the purpose of illustration of different formats of frames with different protocol and encapsulation types, and the present invention is a flexible system designed to accept various different protocol and encapsulation formats and to provide an assist to the processing of those frames by providing a pointer to the type of encapsulation and protocol and to provide a starting address in the instruction storage for the processor handling a given frame.

Fig. 3A illustrates the generic or base Ethernet message format, which is sometimes called Ethernet Version 2.0/DIX. This is a message format where the message includes a destination address DA, a source address SA, a block indicating the type of message (Type), the message text or data, and a trailer for cyclical redundancy checking or CRC for message integrity verification. The destination address DA and the source address SA are both specified as 6 bytes (48 bits) and the block indicating Type is specified as 2 bytes, while the CRC trailer is specified as 4 bytes. In general, the rest of the message -- the Data -- can be of any length, up to 1500 bytes, although, as will be seen later, some types of Ethernet provide limits on this flexibility to achieve other advantages. The source address SA can indicate either that the message is an individual message, destined for a single network address on one node on the network or that it is a multicast or a broadcast message. A multicast message is directed to a group of nodes on the network and a broadcast is directed to all stations. The block indicating Type is 16 bits which identifies the higher layer protocol which is used. Each registered Ethernet protocol is given a unique type code , a value which is always greater than the maximum value in the length field of the Ethernet 802.3 length field, to allow the field to coexist. The data field is typically from 46-1500 bytes in length, assuming that the upper layers will ensure that the minimum field length of 46 bytes is met prior to passing data to the MAC layer. Messages which are longer than the allowed length of a frame must be split into a plurality of messages which are shorter than the maximum allowed length of the data field.

Fig. 3B illustrates a variation on the general Ethernet style which is referred to as the IEEE 802.3 Ethernet format. It is similar to the format of the generic Ethernet message format of Fig. 1, except that the type field is replaced by a length field LEN, which is 16 bits which indicates the length of the data field which follows, excluding any pad. This standard imposes a minimum size length of the packet as 64 bytes, so the data field Data must be at least 46 bytes. If the actual data for the data field Data is less than 46 bytes, then the MAC layer must add place savers (padding characters) to the LLC data field to make the minimum size before sending the packet over the network. However, the length field is the length without the padding characters, which allows a receiving system to identify and disregard any padding characters which have been added.

Fig. 3C illustrates a Tag Control Information Format for the Ethernet messages, particularly with reference to the IEEE standard 802.1q. It consists of 3 bits of user priority, 1 bit of Canonical Format Indicator or CFI and 12 bits of VID or Virtual LAN (or VLAN) Identifier. A virtual LAN or local area network is an identification of a group of nodes which have been identified as a virtual local area network by defining the addresses as comprising a VLAN, allowing those nodes which are not physically associated to be logically associated and addressed as a group, rather than individually.

Fig. 3D illustrates an Embedded RIF (or E-RIF) format which is used in some Ethernet protocol message formats, again following IEEE standard 802.1q. In this format, a route type RT is indicated by the first 3 bits, a length LTH by the next 5 bits (indicating the length in bytes of the total E-RIF portion, including the E-RIF route control and E-RIF Route Descriptor), and a route descriptor direction D by one bit (normally a "0" indicating to traverse the route descriptor in forward order, but it is a "1" in some specially routed frames to indicate that the route descriptor is in reverse order). The E-RIF format includes a largest frame indicator of 6 bits and a Non Canonical Format Indicator (NCFI) of 1 bit. The route type RT is either 00X, 01X, 10X or 11X to indicate that the frame is either a specially routed frame, a transparent frame, all route explorer frame or a spanning tree explorer frame, respectively. The largest frame LF field is 1470 bytes or less, according to the IEEE 802.3 Standard for Ethernet. The NCFI indicates either that the MAC addresses specified are in the non-canonical form (if 0) or in canonical form (if 1).

Fig. 3E illustrates the E-RIF Route Descriptor Format as including a local area network identification LAN ID of 12 bits and a bridge number (Bridge#) of 4 bits. An E-RIF Route Descriptor Format field is also well known in the industry and this usage follows the standard for such fields.

Fig. 3F and Fig. 3G illustrate components of LLC formats for use in an Ethernet message, including an 802.2 LPDU format in Fig. 3F and a Generic SNAP format in Fig. 3G. The LPDU format of Fig. 3F includes a Destination Service Access Point DSAP of 1 byte (8 bits), a Source service access point SSAP of 1 byte and a control field Control of 1-2 bytes including command(s), response(s), sequence number(s) and poll/final bits. In this context, a service access point is 6 bits plus a U bit and a final bit (an individual I bit for the destination service access point and a C bit for command/response indicator for the source). Fig. 3G illustrates the SNAP format, including three bytes indicating the organization (the Organizationally Unique Identifier, or OUI) and two bytes indicating the type assigned to the format under Internet Standard 0002. Examples of the type field are 0800 for IP, 8137 for IPX, 0806 for ARP, 8035 for RARP, 8100 for 802.1q VLAN, 86DD for IPv6, 80DB for Appletalk and 80F3 for Appletalk AARP.

Fig. 3H illustrates the format of a message in the IPX over Ethernet format including an Ethernet MAC header and an IPX header, with the Ethernet MAC header having a source address SA and a destination address DA of 6 bytes each, followed by a two byte type of 8137 indicating that this frame is of the IPX format. The IPX header then includes the components indicated, namely 2 bytes for a check sum, 2 bytes for the packet length, 1 byte for TC, 1 byte for PT, 4 bytes for the destination network, 6 bytes for t:he destination node, 2 bytes for the destination socket, 4 bytes for the source node, 6 bytes for the source node and 2 bytes for the source socket.

Fig. 3I shows the message format for IPX over a proprietary version of Ethernet 802.3 (sometimes referred to as a Novell format) including an Ethernet 802.3 MAC header where the length of the message is specified in the third field (rather than a type in the IPX over Ethernet shown in Fig. 3H). The check sum in this format is set to "FFFF" according to its protocol.

Fig. 3J illustrates an IPX over Ethernet 802.3 with 802.2, where the message includes a MAC header with an IPX header (like those shown in Fig. 3H) separated by the LLC LPDU fields for the 802.2.

Fig. 3K illustrates the format of an IPX frame over 802.3 with SNAP where, like the format described in connection with Fig. 3J, the message includes an 802.3 MAC header, followed by the LLC LPDU field and concluding with the IPX header. Disposed between the LLC LPDU portion and the IPX header is the SNAP field for indicating the OUI and an Etype of 8137.

Fig. 3L illustrates the format of an IPX over Ethernet with 802.1q VLAN support, where the type field is indicated as 8100 and thee VLAN packet is disposed between the Ethernet MAC header and the IPX header (the IPX header being in the same format as described in connection with Figs. 3H, 3J and 3K above). The VLAN packet includes the TCI field of 2 bytes and a length LEN or e-type field of 2 bytes, then a e-rif control field and a variable number of e-rif descriptor fields, the number of which being indicated by the formula (LEN-2)/2.

Fig. 3M illustrates the format for an IPX over Ethernet 802.3 (proprietary) using 802.1q VLAN support. The type field is 8100 and the VLAN Packet is similar to that in the previous VLAN example, Fig. 3L. The IPX header is similar to that shown in the earlier 802.3 proprietary frame, Fig. 3I, with the checksum field set equal to "FFFF".

Fig. 3N shows the frame arrangement for a frame using the IPX over Ethernet 802.3 with VLAN support. It includes a 802.3 MAC Header with a type of 8100 indicating the presence of a VLAN packet (like Fig. 3M), a VLAN Packet (also in a format like Fig. 3M), an LLC LPDU (similar to that shown and described in connection with Fig. 3J), and an IPX header (as shown in Fig. 3H).

Fig. 30 shows the configuration or format of a message in the IPX over Ethernet 802.3 with SNAP and VLAN support using 802.1q. It is similar to the format of Fig. 3N, with the addition of a SNAP field between the LLC LPDU field and the IPX Header.

Fig. 3P shows the format of IPv4 over Ethernet where the message includes an Ethernet MAC header and an IPv4 header. The length of each of the fields is shown in this view.

Fig. 3Q illustrates the message format for IPv4 over Ethernet 802.3 with 802.2, showing the MAC header followed by the LLC LPDU, then the IPv4 header.

Fig. 3R illustrates the message format for an IPv4 frame over Ethernet 802.3 with SNAP where the 802.3 MAC header is followed by the LLC LPDU, then the IPv4 header (and with a optional trailer for UDP or TCP, if applicable).

Fig. 3S illustrates the message format for IPv4 over Ethernet with 802.1q VLAN Support. This format has the features of the IPv4 as well as the VLAN Packet seen in other instances of the 802.1q VLAN support.

Fig. 3T illustrates the message format for IPv4 over Ethernet 802.3 (with 802.2) with 802.1q VLAN Support, combining the attributes of IPv4 over 802.3 with 802.2 with the message characteristics of the VLAN Packet.

In each of Fig. 3H through 3T, the bottom line represents the Layer 3 (or L3) portion of the frame or message, and, because of the variations in size of the material which precedes the L3 portion of the message, the L3 portion of the message begins at different places, depending on the type of message -- the protocol and encapsulation method. Although the processing of an L3 message is desired (ignoring the encapsulation), it may be difficult in a multi-protocol and multi-encapsulation system to find the beginning of the L3 message. Further, since the instructions carried out by the one of the plurality of processors 110 on the frame depend on the type of frame protocol and encapsulation method, it is desirable that something (in this case, the hardware classifier assist 118) provide a pointer to the correct starting instruction for the processor into the instruction memory 122.

Fig. 4 illustrates a block diagram for the classifier hardware assist shown as element 118 in Fig. 2, along with selected portions of the instruction memory 122 and one of the plurality of processing units 110. The classifier hardware assist 118 operates on 128 bit segments associated with the input information unit (or frame), which 128-bits segments are sometimes called "FISH" and are received by the classifier hardware assist 118 (as well as one of the individual processing units 110) from the dispatcher 112. This. classification function operates on up to the first 3 FISH (or the first 384 bits associated with a frame, sometimes called FISH1, FISH2 and FISH3 to distinguish one FISH from another). The first FISH (FISH1) is not actually the received frame, but a set of information related to that frame, such as what port the frame came in on, a default code entry point 291 and an indicator 292 (yes or no) whether to enable frame classification using the hardware classifier of the present invention.

At the block 210, the type of Ethernet is compared at varying places in the frame to determine if the fields match a presently-configured protocol, for example, a first Ethernet version (e.g., IPx) or a second Ethernet version (e.g., IPv4). At the block 220, it is determined whether the SAP (service access point) field matches a presently-configured protocol, again as specified in a register (e.g., a specific stored value, indicating a type of protocol). The system also determines whether a SNAP field representing a different type of encapsulation is present (a specific field such as "AAAA03" in block 240 and detects the presence of a virtual local area network (VLAN) usage in the message at block 250. Block 260 is classification control, which, when enabled by the enable classification 292, is responsible for storing the parameters associated with the frame and providing an output indicative of the protocol type, a layer 3 pointer, and classification flags on lines 270, 272, 274.

A control entry point for each message (the beginning of processing, the address of the first instruction in the instruction memory 122) can be determined in advance for each defined format and stored in a table 280. That is, for a ETYPE = 0 and no VLAN, then control entry point (the beginning address) is address 122a in the instruction memory, and for an ETYPE = 1 and without the VLAN, the control entry point is address 122b. Similarly, for ETYPE = 0 with a VLAN and ETYPE = 1 with VLAN, the respective control entry points (the place at which the processing of the actual message begins) are instruction 122c and 122d, respectively. Processing will begin at instruction 122f for frames with an ERIF field and at instruction 122f for default programs, where the protocol or encapsulation method is not found.

In any event, a default control entry point is contained in FISH1 of the message and is read at block 290. Block 295 then determines whether to use the default control entry point -- if hardware classification is enabled at line 295 and no different control entry point is determined from the block 280, then the default entry is used; otherwise the control entry point from the table 280 is used.

The lines 270, 272 (with the classification flags and the L3 base address determined by the hardware classifier assist 118, respectively) from the hardware classifier 118 are fed to the individual processor 110 which is assigned to process the frame and are stored in general purpose registers 110a associated with the one processing unit which is processing the frame which is stored in data memory 110b. The output line 276 from the device 295 provides the starting address for the instruction memory 122 for the particular type of frame, data which is stored in instruction control logic 110c. An ALU (arithmetic/logic unit) is a part of the processing unit 110. The processor 110 uses the instruction counter in the instruction control logic 110c to fetch an instruction from the instruction memory 122. In this way, based on the protocol and encapsulation method as determined by the hardware classifier assist 118, the processing unit 110 is preconditioned with the starting address of the instruction set which is appropriate for the frame being processed, and appropriate flags indicating the type of frame are set to allow the processor 110 to begin processing the frame using the correct instructions.

Fig. 5 illustrates the logic that this used in determining the categorization of the message format. This begins at block 310 where FISH2 is selected, then at block 320 bytes 13-14 of the frame (the two bytes which would include the type information in a frame which includes the 6 byte destination address DA and the 6 byte source address SA followed by the type) are tested. If these bytes match the content for either ETYPE0 or ETYPE1, then the process identifies the protocol information by setting the appropriate flag at block 323 and concludes the process at block 325. Otherwise, if the type block is less than 0600H (hexadecimal), then the frame is in the Ethernet 802.3 frame format and not the Ethernet V2.0DIX format) and the field is a length field rather than a type field and it is processed on the left side of the diagram of Fig. 5. If this type block is 8100, then the frame is a frame which employs the 802.1q VLAN support (see, for example, Figs. 3L, 3M, 3N, 30, 3S and 3T) and it is processed on the right side of the diagram of Fig. 5. If the type field if it is anything else, then control passes to block 325 where classification is considered complete without recording any protocol information, since this frame is apparently an unknown protocol.

If at the block 320 it was determined that the bytes 13-14 were less than 0600H, then at block 322 bytes 15-17 are analyzed to determine whether they are known as a SAP field or an LLC or Logical Link Control field of the type (e.g, AAAA03 used in Fig. 3K). If this field is recognized as one of the SAP fields, then the SAP field is set and protocol information is saved at block 323 before considering the classification complete at block 325. If this is a SNAP field, then control continues to block 324 where FISH3 is obtained and bytes 2-6 of it are analyzed for a recognized ETYPE. If the ETYPE is recognized, then the protocol information is saved at block 323 before exiting at block 325.

If at block 320 it was determined that the bytes 13-14 were equal to 8100 indicating that this is a virtual local area network (VLAN) as specified in IEEE standard 802.1q, then the existence of the VLAN is saved at block 330, then at block 340, the presence of a CFI field is checked. If it is present, t:hen classification is complete and control passes to block 325. If not, then at block 350, bytes 1-2 of FISH3 are tested to determine whether they provide a known ETYPE (like the test at block 320) or a length (less than 0600H). If they provide an ETYPE, then the protocol information is saved at block 323 and control passes to block 325 where the classification is considered complete. If the field in block 350 is not recognized as an ETYPE, then the classification process is considered complete at block 325. If the test at block 350 provided a length (less than 0600H), then at block 360, bytes 3-5 are tested for a known SAP. If it is AAAA03, then control passes to block 370 for determination of the bytes 6-10 for a known ETYPE.

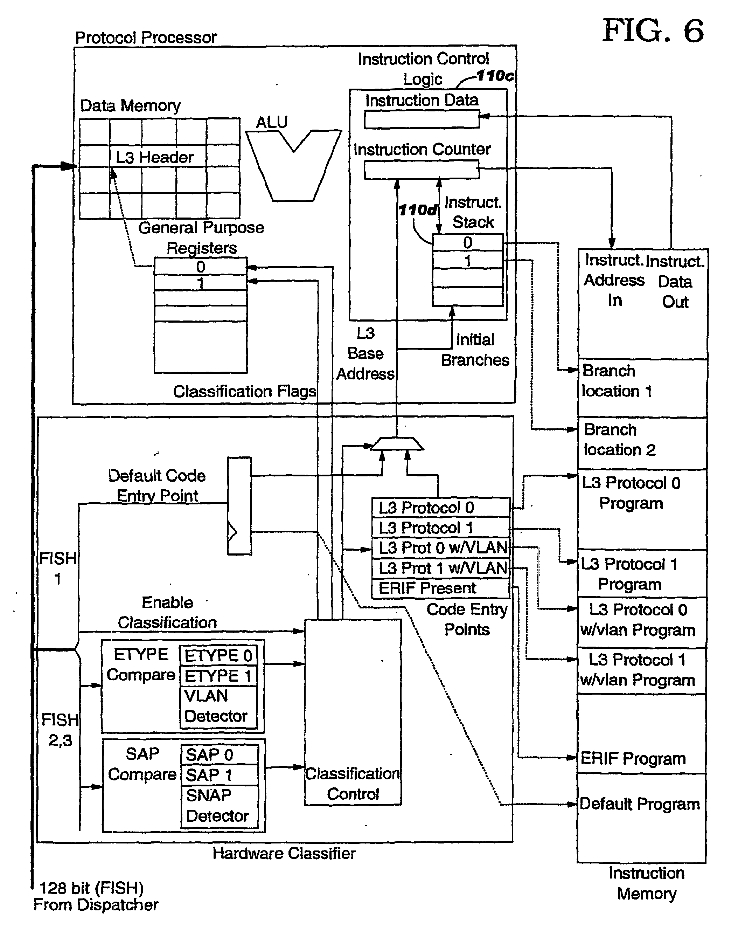

Fig. 6 illustrates an improved version of the hardware classifier, particularly of the elements of Fig. 4. In this Fig. 6, the hardware classifier includes the elements of Fig. 4 with an improvement to the instruction control logic 110c including, instead of a single beginning address, a series of addresses stored in an instruction stack 110d. This instruction stack includes the initial instruction address, followed by other addresses needed when the processor reaches a fork or branch, to avoid further testing or conditional statements at later branches. The starting addresses then are stored in order in a stack and removed from the stack when a branch instruction is needed.

For further information about the definitional content of Ethernet messages of various protocols or encapsulation techniques, the reader is directed to the appropriate standard or reference guide for Ethernet frame construction. Some generally available documents which may be useful in the understanding of Ethernet protocols and encapsulation techniques and the standards and options related thereto are: ISO/IEC Final CD 15802-3, IEEE P802.1D/D15, November 24, 1997, Annex C; IEEE Draft Standard 802.1Q/D9 dated February 20, 1998; RFC 1700 - Assigned Numbers by J. Reynolds and J. Postel, October, 1.994 (a document which is also available at http://www/isi.edu/rfc-editor/rfc.html); IBM Token Ring Network Architecture Reference; and IBM LAN Bridge and Switch Summary. Publication Number SG24-5000-00, Version 1.3, January, 1996, particularly Chapter 1.1.1.

The hardware classifier may be designed in various ways including through the use of one of a variety of generally available software tools for designing and manufacturing logic designs in a hardware (or in the actual implementation on the silicon substrate) configuration, as well as being designed by traditional design by hand by a logic designer. In this example, the desired tests are programmed using a software language known as VLSI hardware definition language, or shortened to (VHDL), and then put through a known piece of software (such as one marketed by IBM or one marketed by Synopsis) to create a design with the necessary gates and logic to accomplish the desired tests in a hardware fashion. Other similar design systems exist and can be used to advantage, so that the designer of the logic need not know the structure of the gates or their location, only their logical function of desired inputs and tests and outputs.

As mentioned above, it may be desirable in some systems to include in the processing system of the present invention the capability to forward processed frames of a data flow in the order in which they were received, independent which processors are assigned to process each frame. In such a system, the dispatcher 112, after identifying an available processing unit and assigning a received frame to the processing unit for processing, will create and store identifying information for the frame and the processing unit to which it was assigned.

Frames typically arrive with identifying information such as a message number (sometimes referred to as a MAC) and the address of the source (sometimes designated as SA) and destination (sometimes designated as DA) of the frame. The location and content of such information may vary depending on the format of the message and its encapsulation technique, but this information allows the frame to be properly routed to the destination through the system and the switches and routers and to be assembled into a complete message in the proper order, even if the entire message is longer than a single frame. Typically, the components of a message are referred to as a data flow and each portion of the data flow would include the same identifying information (such as a MAC, SA and DA). The actual label (or identifying information) assigned to an input frame by the dispatcher 112 unit may be created in a variety of ways, such as the MAC-SA+DA, or by logically XOR-ing the LID with the MID fields in other message formats.

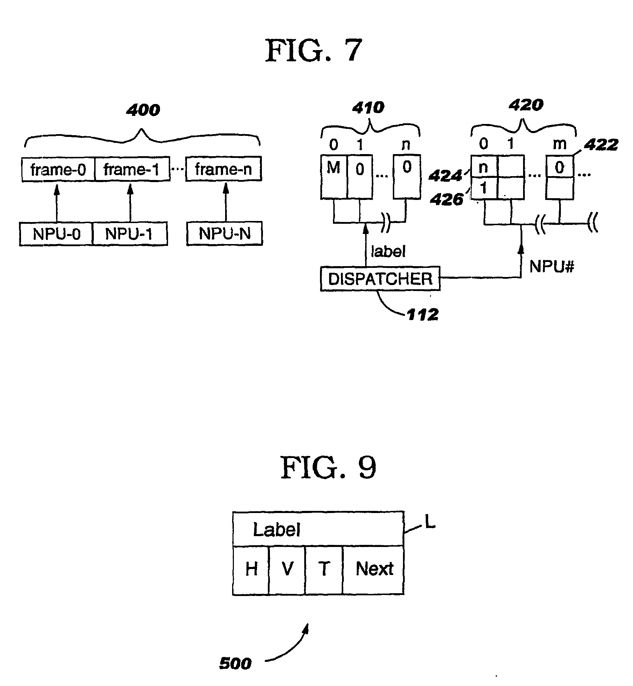

As shown in Fig. 7, storage in three lists or queues may be created for each frame. First, a queue 400 of processed frames is defined to hold completed work (an output or processed frame, received from the processor which processed a given frame), requiring a buffer or memory space for at least one completed frame for each processor, shown as frame-0 to frame-N where processors identified as NPU-0 through NPU-N are coupled to the respective frame. When the dispatcher 112 sends a frame to a processing unit, it sends the identifier for that frame to a second memory or queue 410 which includes storage locations 0 through n, corresponding to t:he respective network processing units NPU-0 through NPU-N. When a frame with the identifier or label m is sent to NPU-0, then the memory 0 corresponding to the label for the NPU-0 is sent the identified m for storage, indicating that NPU-0 is processing an input information unit whose identifier is m. It will be recalled that a later frame which has the same identifier m will belong to the same data flow and a frame which has a different identifier or label will represent a different data flow. Thus, if an input information unit having the label of 0 is received and dispatched to NPU-1, then a 0 is recorded in the storage 1 corresponding to NPU-1. Then, if later a second input information unit from the same data flow (also with a label of 0) is received by the dispatcher 112 and assigned to processor NPU-N, the memory N also has stored the label of 0 representing that information unit being assigned to processor N.

The third memory 420 includes storage for each of the labels currently being processed by the n processing units. For each of the labels, the identifier of the processor assigned is stored, and, since the listing occurs sequentially, the first processor assigned to a particular message flow appears first in the memory. In this case, for label m, an entry 0 in memory 422 indicates that NPU-0 is processing an input information unit from that flow and for the label 0, a first unit is being processed by processor NPU-N as shown by memory 424 and a second unit is being processed by processor NPU-1 as shown by memory 426. For a given flow, the order in which the input information units arrived at the dispatcher is to be maintained so that the subsequent transmission of the same data flow can occur in the same order in which it was received, so it will be seen that the label memory 424,426 have the NPUs or processing units listed in the order in which the input frames were received from the network and dispatched to the N processors.

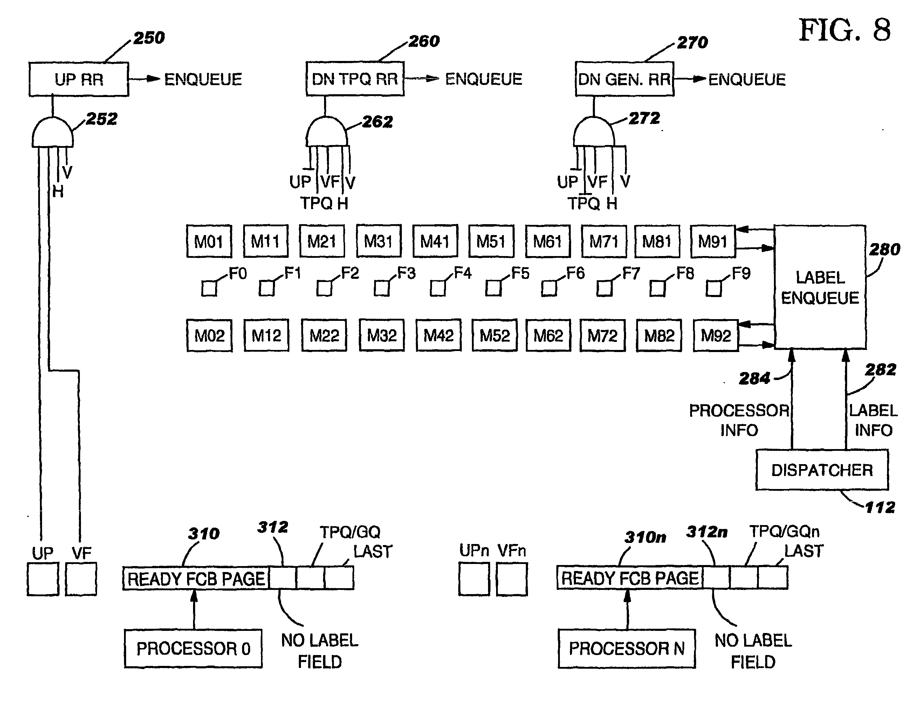

Fig. 8 illustrates a more detailed structure of the completion unit 114 used in processing input frames and employing the data management techniques described. The completion unit 114 as shown in this embodiment communicates with a plurality of round robin devices for distributing the output (e.g., processed information units) of the processing units, not shown in this Fig. 4. The plurality of round robin devices include an up-round robin 450 and two down round robin devices, one round robin identified as 460 for target ports (a small number of frequently used ports addressed specifically) and one round robin 470 for general distribution (processed information addressed to other ports than the specifically addressed target ports).

Logical AND gates 452, 462, 472 provide the gating for the round robins 450, 460, 470, respectively. For the AND gate 452 which provides a frame to the UP round robin 450, the inputs are that it be an UP frame (from the block UP associated with the Ready FCB page 510), that the frame be a valid frame (the indicator VF that it is a valid frame, ready for transmission), that the label field be valid in the associated frame label field (M01 through M92) and that the label be associated with a head (or earliest) frame of a data flow.

The dispatcher 112 provides two pieces of information to the label enqueue 480 when a frame is dispatched to a given processor -- a label for the frame on line 482 and the identity of the processor to which the frame has been assigned on line 484. The label for the frame identifies the data flow to which the frame belongs, which, in the preferred embodiment, is based on the MAC plus the source address less the destination address, with the objective of providing a unique identifier for each data flow so that frames from the same data flow will have the same label and frames from different data flows will have different labels or identifiers.

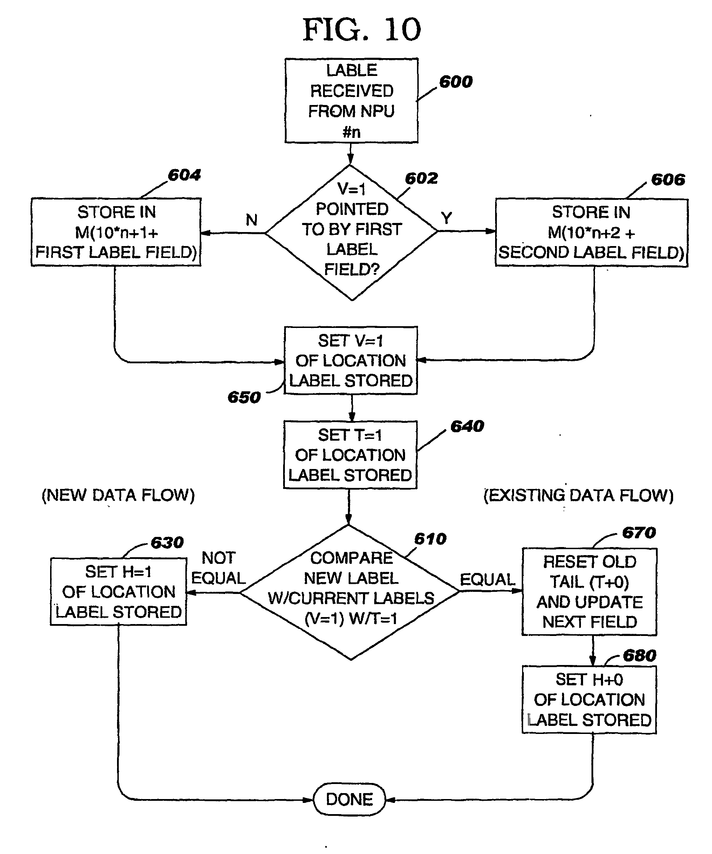

Fig. 9 illustrates a format for the label field element 500 storing information associated with each of the N processors. Each of the N processors has two such label fields associated with it, one for the frame being processed and one for a frame which has been processed and is awaiting transfer out from the processing complex. The processed frame ready to be transferred is held in a memory or storage 510 which is sometimes referred top as a Ready FCB Page and one of these storage exists for each of the N processors.

The label field element 500 includes a label L, a head field H, a valid field V, a tail field T and a next field N. The label L is derived from the message content and represents a unique identifier for each of the data flows. The head field H identifies the beginning of a data flow or a chain of related frames currently being handled by the N processing units, either as work being processed or processed frames awaiting transfer out of the processing complex. Each data flow being processed in the processing complex of N processors has a head or beginning (or first-received frame for that data flow) somewhere in the N processors, and that beginning is identified as its "head" with a 1 in the head field H for its associated label field element. Similarly, each data flow in the processors also has a last frame currently in the N processors, and that last frame is identified as the tail by a 1 in the tail field T.

The valid field V indicates whether the processor contains real data (as it would from processing) indicated by a 1 in the valid field or if it does not, which is indicated by a 0 in the valid field V. When the processing first begins, no real or valid data exists in the system, so the valid field V is set to 0 as part of the initialization of the system. Later, as data is read out of the Ready FCB page 510 for a given processor , then the valid field V corresponding to that processors FCB Page is set to 0, indicating that the processor no longer has valid information corresponding to that label (since the information in the FCB page has already been passed along to the round robins; although the processor may still have valid information in the other label field associated with that processor because the processor itself may be working on a different frame). The next field N indicates the label field associated with the next frame in the same data flow -- an other one of the 2N label fields associated with the N processors. A label enqueue 480 receives a message from the dispatcher for each input information unit or frame that a given frame has been dispatched with its identifier for the data flow and the processor to which the frame has been dispatched.

Fig. 10 illustrates the flow of the label enqueue 480 of Fig. 4. As a frame is dispatched from the dispatcher 112 to one of the n processors, at block 600 a label for an input information unit or frame is sent to the label enqueue 480 on line 482 and an identification of which of the n processors is handling the frame on line 484. The first processing by the label enqueue 550 is at block 602 to determine whether the valid field V is 1 for the one storage to which the first label field points. If the valid field V is 1, then the storage pointed to is occupied, and the data should be stored in the other storage as indicated by block 606, otherwise the storage pointed to should be used at block 604. Next, at block 650, the valid field V for the appropriate storage is set to 1 to indicate that valid data is stored in that storage and at block 640 the tail indicator T for the current storage location is set to indicate that this is the last of the current data stream (until the next frame for the same data flow is received, at which time the tail field T is reset). Next, at block 610 the label is compared with the current labels being handled by any of the processors (of course, the valid field V must be 1 for these, indicating that this is a valid frame). The result of this comparison is either that the current label equals one already in process in which case control passes to block 670 or that it does not match any label currently in process, in which case control passed to block 630. If there is a match with one of the current labels, then the frame is a part of an existing data flow, so at block 670 the tail field T of the previous end of the data flow is reset (so T=0) and the next field pointer for that label field is set to point to the current frame's location. Then at block 680, the head field H is set to 0 indicating that the current frame is not the head of a data flow. If the label for the current: frame was not equal to any label currently stored, then the current frame is a new data flow and the current frame is the beginning of it, so the head field H is set to 1 to indicate that status at block 630. After the processing of block 630 or block 680 to set up the appropriate flags, particularly the head field H, the process of linking to existing dataflows and setting up the fields or flags is done.

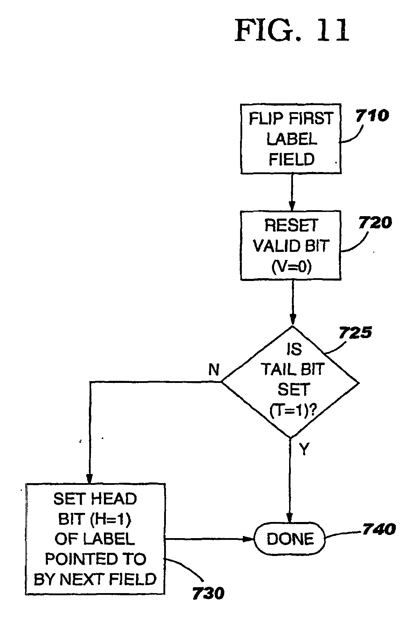

At Fig. 11 the process for processing out or delivering a frame out of the processors is shown. First, the first field indicator is flipped so that the pointer points to the other storage as the first or next field for the processor at block 710. Then, at block 720 the valid field V is reset to 0, indicating that the data is no longer valid (the frame has been dispatched out, and the data does not represent a frame currently being processed). Block 725 tests whether the tail field T is set (T=1) indicating that this is the last frame of a particular data flow. If it is, then control passes to block 740, indicating that the process is done. If not, at block 730, then the next frame in the succession is located (by the pointer in the next field) and its head bit or flag H is set to indicate that it is the first frame in that data flow presently in the processors. Then, from block 730 the setting of flags is done as indicated by block 740.

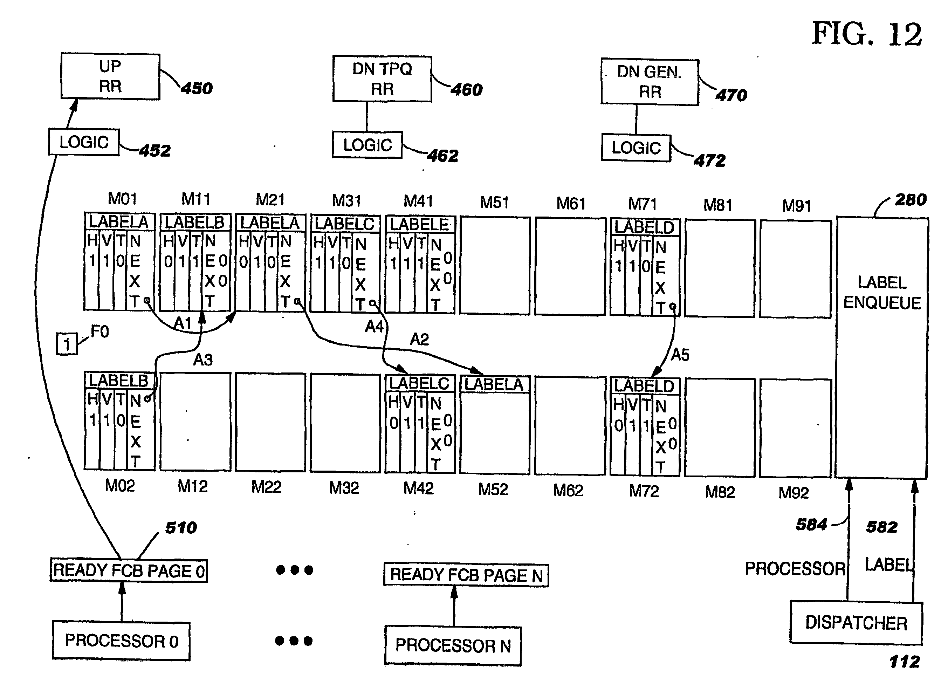

Fig. 12 illustrates the system of the present invention by an example, illustrating how several data flows could be accommodated by the completion unit described above with the logic of Fig. 10. The N processors with the dispatcher 112 and the completion unit have been working for some time, so Fig. 12 represents a snapshot of data stored in a portion of the completion unit, particularly with reference to the label storage. As shown in this figure, the label enqueue is coupled to the plurality of label memories, two for each of the N processors. Each of the processors also has associated with it an output buffer (sometimes referred to as the Ready FCB Page) for those processed frames which are awaiting transmission to the three round robins shown. Associated with each of the pair of label memories is the first label memory to indicate which of the label memories was received first (and, when both label memories are valid, the first label represents the one which is in the Ready FCB Page buffer and the second or later-received label represents the one currently being processed in the respective processor). Five separate data flows are depicted in this figure, although the number of data flows which are in progress at any given time depend on the system (particularly its size and the network traffic) and can vary over time. In this example, the ten processors are identified as processors 0 through 9 and the label memories are identified as memories M01 and M02 for processor 0 through label memories M91 and M92 for processor 9, although the number of processors is a design choice and subject to change, if desired. A first data flow with identifier A starts at label memory M01 as shown by the indication (H=1) that label memory M01 (and the corresponding reference to processor 0) represents a head of a chain or data flow. The next field N of label memory M01 points to label memory M21 to indicate that the processor 2 is handling the next information unit associated with this data flow. The next field of the label memory M21 points to label memory M52 which indicates that processor 5 has the next portion of this data flow. The set tail field for the label memory M52 indicates that this is the final portion of this data flow currently being processed in the N processors. The data flow sequence in this example is shown by arrows A1 pointing from label memory M01 to label memory M21 and arrow A2 pointing from label memory M21 to label memory M52, to illustrate the logic connection between elements of the data flow (the arrows logically represent the pointers in the next field and do not exist physically in the actual implementation). Similarly, a data flow from label memory M02 to label memory M11 indicates by arrow A3 an order in the same data flow (although a different data flow from that described in connection with label memories M01, M21 and M52). A third data flow is indicated with arrow A4 in connection with label memories M31 and M42, with a fourth data flow indicated by arrow A5 between label memories M71 and M72. Finally, a fifth data flow is indicated at label memory M41 which has no arrow since it is a data flow presently including only a single label memory. This label memory M41 is both the head and the tail of the data flow and has no next field, since there is no other label memory associated with this data flow.

It will be remembered that, when there are two label memories associated with a single processor, one of the label memories represents a completed or processed information unit stored in a buffer and sometimes referred to as a Ready FCB Page, ready for transfer to the appropriate round robin unit for transmission from the processing complex, either up or down as the case may be, indicating that, for transfers up that it will be transferred to the interface device and for transfers down that it is being transferred back toward the data transmission network. In this case, processor 0, processor 4 and processor 7 include data in both of the associated label memories. Associated with each Ready FCB Page is also an UP field (indicating whether this is an up or a down page), as well as an indicator as to whether, if this is a down page, the frame is addressed to a target port or a general port, which determines whether to transfer a down page to the down target port round robin or to the general port round robin. If the earlier-received frame for processor 0 was the label memory M02 and that is both a head of a data flow and an up frame chosen by the up round robin device for the next transmission out of the processor complex and its buffer, then the FCB Page and associated data fields are removed from the Ready FCB Page, transferring the information to the up round robin. Then, the first label indicator is toggled to indicate that the other label memory M01 for processor 1 is now the first, and the valid field V for the label memory M02 is set to 0 indicating that this label memory is no longer active or valid and the valid field VF for the associated FCB page is reset to 0.

The present invention supports new data flows without disturbing the existing data flows and without needing to know about a new data flow in advance. A packet representing a new data flow (for example, a message from one of the processing units about its status) is simply stored with its identifying data and no reference to another data flow. Its lack of an identifier will not match the identifier for any of the existing data flows with a "no label" field set, a message which can go anytime.

The present invention also allows for a flush command to override the processing of the data flows in respective order by allowing the system to process completed frames in the order in which those completed frames are received, ignoring the chaining of label field (the next pointers and the requirement that a given frame be a head before having access to the round robin devices which forward the frames). This may be accomplished by forcing "no label field" on the FCB Page.

A single data flow will remain blocked until the head of the data flow has been processed, since in normal operation (without the flush alternative) only frames which are the head of the message flow will be considered for sending out to the round robins by the completion unit. However, each data flow has its own head, so one data flow may be blocked but the other data flows can continue to process and send out completed information units to the round robins without interruption or hindrance and without intervention. This is particularly useful in the instance where a single data flow is halted (for example, a processor fails or cannot process one element of a single data flow) since the other data flows are not halted. Otherwise, the entire processing would stop until the single data flow blockage were rectified.

Of course, many modifications of the present invention will be apparent to those skilled in the relevant art in view of the foregoing description of the preferred embodiment, taken together with the accompanying drawings. For example, the labels which are stored could be generated in other ways not based on the message content, or could simply be a consecutive numbering of data flows identified by the dispatcher.

## Claims

1. An apparatus comprising:
a semiconductor substrate;
N processing units (110) fabricated on the substrate, where N>1;
first internal data memory fabricated on said substrate, said data memory for storing information accessible to said N processing units;
a dispatcher (112) operatively coupled to the N processing units for receiving and transmitting to one of the N processing units an input information unit;
a classifier (118) coupled to the dispatcher, said classifier including a comparison unit (114) for determining a data format for an input information unit and for generating and storing in the internal data memory output indicators for the input information unit output indicators indicating the data format of the input information unit and a starting address for the input information unit, indicators and the starting address which are available to the one of the N processing units during its processing the input information unit and used in the processing of the input information unit; and
a completion unit (114) carried on the semiconductor substrate and operatively connected to the N processing units (110) for receiving the information unit processed by the one of the N processing units (110).

2. An apparatus of the type described in Claim 1 wherein the comparison unit includes a test for a virtual local area network field contained in the input information data and the generated output indicators include an indicator for identifying the presence of the virtual local area network field in the input information unit.

3. An apparatus of the type set forth in claims 1 or 2 further wherein the indicators further include the identity of the one of the N processing units (110) to which the input information unit was assigned.

4. An apparatus of the type set forth in Claim 3 and further including a flag indicating that the processed information units (110) are to be transmitted from the substrate in the order in which the processed information units are received, with said completion unit (114) responding to the flag to dispatch processed information units as they are completed by one of the N processing units (110).

5. An apparatus of the type set forth in Claim 4 wherein the classifier (118) includes a system for generating and storing in the internal data memory an identifier for each input information unit indicating its data flow and linking later information units from the same data flow to the earlier information unit from the same data flow, with the earlier one in the processors (110) being identified as the first information unit in a particular data flow and the transmission of information units from the processing units (110) is limited to those information units which are identified as the first information unit for the particular data flow.

6. An apparatus of the type set forth in any of claims 1 to 5 wherein the dispatch unit (112) further stores sequentially in a queue an identifier for each information unit and the identity of the processing unit to which the information unit was dispatched for processing; and wherein
the completion unit (114) is further coupled to the sequential queue and utilizes the identifier for each information unit assigned by the dispatcher and the identity of the processing unit to which the information unit was dispatched in order to assemble the processed information units in the same order in which the information units were received.

7. A method of processing an input information unit comprising the steps of:
receiving the input information unit at a dispatcher (112);
sending the input information unit from the dispatcher (112) to one of a plurality of processors (110) for processing;
reading selected bits from the input information unit while the information unit is being sent from the dispatcher (112) to the one of the plurality of processors (110);
testing the read bits from the input information unit against known indicators identifying predetermined types of input information units to identify the type and protocol of the input information unit or that the input information unit does not meet any predetermined identifying type of input information unit; and
based on the results of the testing of bits from the input information unit, storing indicators of the type of input information unit and other information about that input information unit; and
using at the one of a plurality of processing units (110) the stored indicators and the other stored information about the input information unit in the processing of the input information unit.

8. A method including the steps of Claim 7 wherein the step of generating the indicators and storing the indicators occurs while the input information unit is being sent to one of the plurality of processors (110) so that, when the one of the plurality of processors (110) processes the input information unit, the indicators and the other information have been determined and stored and the one of the plurality of processors (110) uses the indicators and other information about the input information unit in processing that input information unit.

9. A method including the steps of Claim 7 or 8 and further including the step of generating a starting address for the further processing of the input information unit based on the content of the input information unit and the step of using the stored indicators at the one of the plurality of processing units (110) includes using the starting address.

10. A method including the steps of Claim 7, 8 or 9 wherein the step of reading and testing is accomplished in hardware, whereby the process is accomplished in fewer processing cycles than if the reading and testing was accomplished by executing a series of stored instructions.

11. A method including the steps of Claim 10 wherein the step of using hardware to accomplish the identification of the type of input information unit and storing indicators is accomplished within two machine cycles, whereby the step of using the indicators in one of the plurality of processing units (110) occurs earlier than if the tests were accomplished by executing a series of programmed instructions in sequence.

12. A method including the steps of any of claims 7 to 11 and further including the steps of:
generating and storing an identifier for the input information unit;
storing in association with the identifier the identity of the processing unit to which the information unit was assigned; and
using the identifier and the identity of the processing unit (110) to which the information unit was assigned to transmit processed information units in the order in which they were received.

## Patentansprüche

1. Vorrichtung, die Folgendes umfasst:
ein Halbleitersubstrat;
N Verarbeitungseinheiten (110), die auf dem Substrat hergestellt werden, wobei N > 1;
einen ersten internen Datenspeicher, der auf dem Substrat hergestellt wird, wobei die N Verarbeitungseinheiten auf den Datenspeicher zur Speicherung von Daten zugreifen können;
eine Zuteilungseinheit (112), die funktionsmäßig mit den N Verarbeitungseinheiten verbunden ist, um von einer der N Verarbeitungseinheiten eine Eingangsinformationseinheit zu empfangen und an eine der N Verarbeitungseinheiten eine Eingangsinformationseinheit zu senden;
einen Klassifizierer (118), der mit der Zuteilungseinheit verbunden ist, wobei der Klassifizierer eine Vergleichseinheit (114) enthält, um für eine Eingangsinformationseinheit ein Datenformat zu ermitteln und um Folgendes zu erzeugen und in dem internen Datenspeicher zu speichern: Ausgangsanzeiger für die Eingangsinformationseinheit, Ausgangsanzeiger, die das Datenformat der Eingangsinformationseinheit und eine Startadresse für die Eingangsinformationseinheit angeben, Anzeiger und die Startadresse, die für die eine der N Verarbeitungseinheiten während deren Verarbeitung der Eingangsinformationseinheit zur Verfügung stehen und bei der Verarbeitung der Eingangsinformationseinheit verwendet werden; und
eine Abarbeitungseinheit (114), die sich auf dem Halbleitersubstrat befindet und funktionsmäßig mit den N Verarbeitungseinheiten (110) verbunden ist, um die von der einen der N Verarbeitungseinheiten (110) verarbeitete Informationseinheit zu empfangen.

2. Vorrichtung nach Anspruch 1, wobei die Vergleichseinheit einen Test für ein Feld eines virtuellen lokalen Netzwerks beinhaltet, das in den Eingangsinformationsdaten enthalten ist, und die erzeugten Ausgangsanzeiger einen Anzeiger zur Angabe des Vorhandenseins des Feldes des virtuellen lokalen Netzwerks in der Eingangsinformationseinheit beinhalten.

3. Vorrichtung nach den Ansprüchen 1 oder 2, wobei die Anzeiger des Weiteren den Bezeichner der einen der N Verarbeitungseinheiten (110) enthalten, der die Eingangsinformationseinheit zugewiesen wurde.

4. Vorrichtung nach Anspruch 3, die des Weiteren eine Markierung enthält, die anzeigt, dass die verarbeiteten Informationseinheiten (110) von dem Substrat in der Reihenfolge gesendet werden sollen, in der sie empfangen werden, wobei die Abarbeitungseinheit (114) auf die Markierung, verarbeitete Informationseinheiten bei Fertigstellung durch eine der N Verarbeitungseinheiten (110) zuzuteilen, reagiert.

5. Vorrichtung nach Anspruch 4, wobei der Klassifizierer (118) ein System enthält, um für jede Eingangsinformationseinheit eine Kennung, die deren Datenfluss anzeigt, zu erzeugen und im internen Datenspeicher zu speichern, und um spätere Informationseinheiten von demselben Datenfluss mit der früheren Informationseinheit von demselben Datenfluss zu verknüpfen, wobei die frühere Informationseinheit in den Prozessoren (110) als die erste Informationseinheit in einem bestimmten Datenfluss gekennzeichnet wird und die Übertragung von Informationseinheiten von den Verarbeitungseinheiten (110) auf diejenigen Informationseinheiten beschränkt wird, die als die erste Informationseinheit für den jeweiligen Datenfluss gekennzeichnet sind.

6. Vorrichtung nach einem der Ansprüche 1 bis 5 , wobei die Zuteilungseinheit (112) des Weiteren eine Kennung für jede Informationseinheit und den Bezeichner der Verarbeitungseinheit, der die Informationseinheit zur Verarbeitung zugeteilt wurde, fortlaufend in einer Warteschlange speichert; und wobei
die Abarbeitungseinheit (114) darüber hinaus mit der fortlaufenden Warteschlange verbunden ist und die Kennung für jede Informationseinheit, die von der Zuteilungseinheit zugewiesen wird, und den Bezeichner der Verarbeitungseinheit, der die Informationseinheit zugeteilt wurde, verwendet, um die verarbeiteten Informationseinheiten in derselben Reihenfolge, in der die Informationseinheiten empfangen wurden, zusammenzusetzen.

7. Verfahren zur Verarbeitung einer Eingangsinformationseinheit, das die folgenden Schritte umfasst:
Empfangen der Eingangsinformationseinheit an der Zuteilungseinheit (112);
Senden der Eingangsinformationseinheit von der Zuteilungseinheit (112) an einen Prozessor einer Vielzahl von Prozessoren (110) zur Verarbeitung;
Lesen von ausgewählten Bits aus der Eingangsinformationseinheit, während die Informationseinheit von der Zuteilungseinheit (112) an den einen Prozessor der Vielzahl der Prozessoren (110) geschickt wird;
Prüfen der aus der Eingangsinformationseinheit gelesenen Bits gegen bekannte Anzeiger, die vorher festgelegte Arten von Eingangsinformationseinheiten kennzeichnen, um die Art und das Protokoll der Eingangsinformationseinheit zu kennzeichnen oder um anzugeben, dass die Eingangsinformationseinheit keiner vorher festgelegten kennzeichnenden Art einer Eingangsinformationseinheit entspricht; und
auf der Grundlage der Ergebnisse der Prüfung der Bits aus der Eingangsinformationseinheit Speichern von Anzeigern, die die Art der Eingangsinformationseinheit anzeigen, sowie anderer Informationen über diese Eingangsinformationseinheit; und
an der einen Verarbeitungseinheit einer Vielzahl von Verarbeitungseinheiten (110) Verwenden der gespeicherten Anzeiger und der anderen gespeicherten Informationen über die Eingangsinformationseinheit bei der Verarbeitung der Eingangsinformationseinheit.

8. Verfahren, das die Schritte nach Anspruch 7 beinhaltet, wobei der Schritt der Erzeugung der Anzeiger und der Speicherung der Anzeiger stattfindet, während die Eingangsinformationseinheit an einen der Vielzahl der Prozessoren (110) gesendet wird, so dass, wenn der eine der Vielzahl der Prozessoren (110) die Eingangsinformationseinheit verarbeitet, die Anzeiger und die anderen Informationen ermittelt und gespeichert worden sind und der eine der Vielzahl der Prozessoren (110) die Anzeiger und andere Informationen über die Eingangsinformationseinheit bei der Verarbeitung dieser Eingangsinformationseinheit nutzt.

9. Verfahren, das die Schritte nach Anspruch 7 oder Anspruch 8 und darüber hinaus den Schritt der Erzeugung einer Startadresse für die weitere Verarbeitung der Eingangsinformationseinheit auf der Grundlage des Inhalts der Eingangsinformationseinheit beinhaltet und wobei der Schritt der Verwendung der gespeicherten Anzeiger an der einen der Vielzahl der Verarbeitungseinheiten (110) die Verwendung der Startadresse beinhaltet.

10. Verfahren, das die Schritte nach Anspruch 7, 8 oder 9 beinhaltet, wobei der Schritt des Lesens und Prüfens in Hardware ausgeführt wird, wodurch der Prozess in einer geringeren Anzahl von Verarbeitungszyklen durchgeführt wird, als wenn der Schritt des Lesens und Prüfens durch Ausführung einer Reihe von gespeicherten Befehlen durchgeführt würde.

11. Verfahren, das die Schritte nach Anspruch 10 beinhaltet, wobei der Schritt der Verwendung von Hardware zur Durchführung der Feststellung, um welche Art von Eingangsinformationseinheit es sich handelt, und der Speicherung von Anzeigern innerhalb von zwei Maschinenzyklen durchgeführt wird, wobei der Schritt der Verwendung der Anzeiger in einer der Vielzahl der Verarbeitungseinheiten (110) zu einem früheren Zeitpunkt stattfindet, als wenn die Tests durchgeführt würden, indem eine Reihe von programmierten Befehlen nacheinander ausgeführt würde.

12. Verfahren, das die Schritte nach einem der Ansprüche 7 bis 11 und darüber hinaus die folgenden Schritte beinhaltet:
Erzeugen und Speichern einer Kennung für die Eingangsinformationseinheit;
Speichern des Bezeichners der Verarbeitungseinheit, der die Informationseinheit zugewiesen wurde, in. Verbindung mit der Kennung; und
Verwenden der Kennung und des Bezeichners der Verarbeitungseinheit (110), der die Informationseinheit zugewiesen wurde, um verarbeitete Informationseinheiten in der Reihenfolge zu senden, in der sie empfangen wurden.

## Revendications

1. Un dispositif, comprenant :
un substrat à semi-conducteur;
N unités de traitement (110), fabriquées sur le substrat, dans lequel N>1;
une première mémoire de données interne, fabriquée sur ledit substrat, ladite mémoire de données devant stocker de l'information accessible audites N unités de traitement;
un répartiteur (112), couplé fonctionnellement aux N unités de traitement, pour recevoir et transmettre à une ou plusieurs des N unités de traitement une unité d'information d'entrée;
un classificateur (118), couplé au répartiteur, ledit classificateur incluant une unité de comparaison (114), pour déterminer un format de données pour une unité d'information d'entrée et pour générer et stocker, dans la mémoire de données interne, des indicateurs de sortie pour l'unité d'information d'entrée, les indicateurs de sortie indiquant le format de données de l'unité d'information d'entrée et une adresse de départ de l'unité d'information d'entrée, des indicateurs et l'adresse de départ qui sont disponibles à l'une des N unités de traitement durant son traitement de l'unité d'information d'entrée et sont utilisées dans le traitement de l'unité d'information d'entrée; et
une unité d'achèvement (114), portée sur le substrat à semi-conducteur et reliée fonctionnellement aux N unités de traitement (110) pour recevoir l'unité d'information traitée par l'une des N unités de traitement (110).

2. Un dispositif du type décrit à la revendication 1, dans lequel l'unité de comparaison comprend un test pour un champ de réseau local virtuel, contenu dans les données d'information d'entrée, et les indicateurs de sortie générés comprennent un indicateur devant identifier la présence du champ de réseau local virtuel, dans l'unité d'information d'entrée.

3. Un dispositif du type indiqué à la revendication 1 ou 2, comprenant en outre le fait que les indicateurs comprennent en outre l'identité d'une des N unités de traitement (110), à laquelle l'unité d'information d'entrée avait été affectée.

4. Un dispositif du type indiqué à la revendication 3, et comprenant en outre un drapeau, indiquant que les unités d'information (110) traitées doivent être transmises depuis le substrat, dans l'ordre dans lequel les unités d'information traitées sont reçues, ladite unité achèvement (114) répondant au drapeau, pour répartir les unités d'information traitées, lorsqu'elles sont achevées par l'une des N unités de traitement (110).

5. Un dispositif du type indiqué à la revendication 4, dans lequel le classificateur (118) comprend un système devant générer et stocker, dans la mémoire de données interne, un identificateur pour chaque unité d'information d'entrée, indiquant son flux de données, et reliant des unités d'information ultérieures, provenant du même fluide de données, à l'unité d'information antérieure, provenant du même fluide de données, l'antérieur parmi les processeurs (110) utilisés étant identifié comme étant la première unité d'information dans un fluide de données particulier, et la transmission d'unités d'information, depuis les unités de traitement (110), est limitée aux unités d'information qui sont identifiées comme étant la première unité d'information pour le flux de données particulier.

6. Un dispositif du type tel qu'indiqué à l'une quelconque des revendications 1 à 5, dans lequel l'unité de répartition (112) stocke en outre séquentiellement, dans une file d'attente, un identificateur pour chaque unité d'information, et l'identité de l'unité de traitement, à laquelle l'unité d'information a été répartie pour le traitement; et dans lequel
l'unité d'achèvement (114) est en outre couplée à la file d'attente séquentielle et utilise l'identificateur pour chaque unité d'information, affectée par le répartiteur, et l'identité d'unités de traitement, à laquelle l'unité d'information avait été répartie, afin d'assembler les unités d'information traitées, dans le même ordre que celui selon lesquelles les unités d'information avaient été reçues.

7. Un procédé de traitement d'une unité d'information d'entrée, comprenant les étapes consistant à :
recevoir l'unité d'information d'entrée à un répartiteur (112),
envoyer l'unité d'information d'entrée, venant du répartiteur (112), à l'un d'une pluralité de processeurs (110), pour traitement;
lire des bits sélectionnés, venant de l'unité d'information d'entrée, tandis que l'unité d'information est envoyée du répartiteur (112) vers l'un de la pluralité de processeurs (110);
tester les bits lus, venant de l'unité d'information d'entrée, pour savoir s'il y a des identificateurs connus, identifiant des types prédéterminés d'unités d'information d'entrée, pour identifier le type et le protocole de l'unité d'information d'entrée, ou le fait que l'unité d'information d'entrée ne satisfait à aucun type d'identification prédéterminée de l'unité d'information d'entrée; et
en se basant sur les résultats du test des bits, depuis l'unité d'information d'entrée, stocker des indicateurs du type d'unité d'information d'entrée et toute autre information concernant cette unité d'information d'entrée; et
utiliser, sur l'une de la pluralité d'unités de traitement (110), les indicateurs stockés et l'autre information stockée, concernant l'unité d'information d'entrée, dans le traitement de l'unité d'information d'entrée.

8. Un procédé selon les étapes selon la revendication 7, dans lequel l'étape, de génération des indicateurs et de stockage des indicateurs, se déroule tandis que l'unité d'information d'entrée est envoyée à l'un de la pluralité de processeur (110), de manière que, lorsque l'un de la pluralité de processeurs (110) traite l'unité d'information d'entrée, les indicateurs et l'autre information ont été déterminés et stockés, et le processeur, parmi la pluralité des processeurs (110), utilise les indicateurs et l'autre information concernant l'unité d'information d'entrée, dans le traitement de cette unité d'information d'entrée.

9. Un procédé comprenant les étapes selon la revendication 7 ou 8, et comprenant en outre l'étape de génération d'une adresse de départ, pour la suite de traitement de l'unité d'information d'entrée, en se basant sur le contenu de l'unité d'information d'entrée, et l'étape d'utilisation des indicateurs stockés, sur l'une de la pluralité d'unités de traitement (110), comprend l'utilisation de l'adresse de départ.

10. Un procédé comprenant les étapes selon la revendication 7, 8 ou 9, dans lequel l'étape de lecture ou de test est accomplie dans une circuiterie, de manière que le procédé soit accompli en moins de cycles de traitement que si la lecture et le test étaient accomplis par exécution d'une série d'instructions stockées.

11. Un procédé comprenant les étapes de la revendication 10, dans lequel l'étape d'utilisation d'une circuiterie pour accomplir l'identification du type d'unité d'information d'entrée et de stockage d'indicateurs est accomplie en deux cycles de machine, de manière que l'étape d'utilisation des indicateurs, dans l'une de la pluralité des unités de traitement (110), se produise plus précocement que si les tests étaient accomplis en exécutant une série d'instructions programmées, séquentiellement.

12. Un procédé incluant les étapes selon l'une quelconque des revendications 7 à 11, et comprenant en particulier les étapes consistant à :
générer et stocker un identificateur pour l'unité d'information d'entrée;
stockers, en association avec l'identificateur, l'identité de l'unité de traitement à laquelle l'unité d'information avait été affectée; et
utiliser l'identificateur et l'identité de l'unité de traitement (110), à laquelle l'unité d'information avait été affectée, pour transmettre des unités d'information traitées, dans l'ordre selon lequel elles avaient été reçues.
